# EUROPEAN PATENT APPLICATION

(11) **EP 4 851 691 A1**
(43) Date of publication of application: **09.12.2026**
(21) Application number: 25751555.1
(22) Date of filing: 06.02.2025
(51) Int. Cl.: G02B 7/04, G03B 5/00

(54) **FOCUSING MOTOR, CAMERA MODULE, AND ELECTRONIC DEVICE**

(30) Priority: 07.02.2024 CN 202410174841
(71) Applicant: Huawei Technologies Co., Ltd., Shenzhen, Guangdong 518129 (CN)
(72) Inventor: WU, Yushun, Shenzhen, Guangdong 518129 (CN); LIN, Huan, Shenzhen, Guangdong 518129 (CN); KUO, Li-Te, Shenzhen, Guangdong 518129 (CN); QIN, Zhenkai, Shenzhen, Guangdong 518129 (CN)
(74) Representative: Huawei European IPR
(86) International application number: PCT/CN2025/075926
(87) International publication number: WO 2025/167956

(57) **Abstract**

This application provides a focus motor, a camera module, and an electronic device. The focus motor includes a base, a support, and a drive mechanism. The support is slidably mounted on the base. The drive mechanism includes a coil and a first magnetic member, and the coil and the first magnetic member cooperate to drive the support to move relative to the base in a first direction. The drive mechanism is configured to drive the support to move from a first position to a second position, to cause the focus motor to switch from a non-working state to a focusing state. The drive mechanism is further configured to drive the support to move from the second position to a third position. A first current is input to the coil during movement of the support from the first position to the second position. A second current is input to the coil during movement of the support from the second position to the third position, and a current direction of the first current is opposite to a current direction of the second current. A spacing between the support and the base in the first direction gradually increases during movement of the support from the first position to the third position. The focus motor in this application can meet both a long-focus photographing requirement and a thinning requirement.

## Description

This application claims priority to Chinese Patent Application No. 202410174841.8, filed with the China National Intellectual Property Administration on February 7, 2024 and entitled "FOCUS MOTOR, CAMERA MODULE, AND ELECTRONIC DEVICE", which is incorporated herein by reference in its entirety.

### TECHNICAL FIELD

This application relates to the photographing field, and in particular, to a focus motor, a camera module, and an electronic device.

### BACKGROUND

With the increase in consumer demands, users have increasingly high requirements for automatic focusing of terminal electronic devices. Currently, focus motors on the market are generally voice coil motors, which drive a lens to move back and forth through cooperation of a coil and a magnet to implement focusing. This requires an overlapping region between the coil and the magnet to cover a focus stroke of the focus motor. As the focus stroke increases, a height of the focus motor also increases. However, the terminal electronic devices are gradually developing toward a thinner and lighter design, which limits the height of the focus motor. Consequently, the current focus motors on the market cannot meet requirements of long-focus shooting scenarios. Therefore, how to obtain a focus motor with a low height that can implement long-focus shooting becomes a current research direction.

### SUMMARY

Embodiments of this application provide a focus motor, a camera module, and an electronic device, to provide a focus motor that has a low height and that can implement long-focus photographing, a camera module including the focus motor, and an electronic device including the camera module.

According to a first aspect, a focus motor is provided. The focus motor includes:
a base;
a support, slidably mounted on the base, where the support is configured to hold a first optical element; and
a drive mechanism, including a coil and a first magnetic member, where one of the coil and the first magnetic member is secured to the base, the other is secured to the support, the coil cooperates with the first magnetic member to drive the support to move relative to the base in a first direction, and the first direction is an optical axis direction of the first optical element.

The drive mechanism is configured to drive the support to move from a first position to a second position, to cause the focus motor to switch from a non-working state to a focusing state. The drive mechanism is further configured to drive the support to move from the second position to a third position.

A first current is input to the coil during movement of the support from the first position to the second position. A second current is input to the coil during movement of the support from the second position to the third position, and a current direction of the first current is opposite to a current direction of the second current. A spacing between the support and the base in the first direction gradually increases during movement of the support from the first position to the third position.

It may be understood that, when the focus motor in this implementation is in the non-working state, a distance between the support and the base is small, which helps compress an overall structural height of the focus motor, to meet a thinning requirement of the electronic device. When the focus motor works, the drive mechanism may first drive the support to move relative to the base in the first direction, so that the support moves from the first position to the second position, to gradually increase the spacing between the support and the base in the first direction, and complete popping up before focusing. Then, when the support is in the second position, a current direction of the coil is changed, so that the support may further continue to slide in the first direction subsequently, to increase the spacing between the support and the base in the first direction. In addition, the first optical element mounted on the support can enter a focus stroke segment, so that the focus motor switches from the non-working state to the focusing state to perform focusing. After the current direction of the coil is changed, the drive mechanism may further continue to drive the support to move from the second position to the third position, so that a focal point of an optical system can be located on an imaging plane, thereby implementing optical focusing. A force applied by the drive mechanism on the support is an electromagnetic force (namely, a first driving force) generated between the coil and the first magnetic member. During movement of the support from the first position to the third position, the spacing between the support and the base in the first direction Z gradually increases. In other words, the focus motor in this implementation is a pop-up focus motor that has a low height and that can meet a requirement of a long-focus photographing scenario and meet a thinning requirement. In addition, in this implementation, only one drive mechanism is disposed in the focus motor, and the current direction of the coil is changed, so that the support is driven to pop-up (that is, moves from the first position to the second position) and the support is driven to move within the focus stroke segment to implement focusing (that is, moves from the second position to the third position). A structure is simple, which helps implement miniaturization arrangement of the focus motor.

In a possible implementation, the first magnetic member includes a first top surface and a first bottom surface that are disposed away from each other in the first direction, and the coil includes a second top surface and a second bottom surface that are disposed away from each other in the first direction. When the support is in the first position, a distance between the second bottom surface and the first top surface is a first distance, a distance between the second bottom surface and the first bottom surface is a second distance, and a ratio of the first distance to the second distance is less than 3. When the support is in the second position, the distance between the second bottom surface and the first top surface is a third distance, the distance between the second bottom surface and the first bottom surface is a fourth distance, and a ratio of the third distance to the fourth distance is greater than or equal to 3. When the support is in the third position, the distance between the second bottom surface and the first top surface is greater than or equal to the third distance. In this way, when the support is in the first position, the first magnetic member and the coil may be staggered in the first direction, and a staggering distance between the first magnetic member and the coil in the first direction is large, so that the distance between the support and the base is small, and an overall height of the focus motor is low. In addition, when the focus motor switches from the non-working state to the focusing state, a stroke of the support moving from the first position to the second position is large, so that the requirement of the long-focus photographing scenario can be met. In other words, the focus motor in this implementation can meet the requirement of the long-focus photographing scenario, and the height of the focus motor is low, so as to meet the thinning requirement.

In a possible implementation, when the support is in the first position, the first distance is less than the second distance. In this way, when the support is in the first position, the staggering distance between the first magnetic member and the coil in the first direction is large, which helps meet the requirement of the long-focus photographing scenario and meet the thinning requirement.

In a possible implementation, the first magnetic member further includes a central surface located between the first top surface and the first bottom surface. A distance between the central surface and the second bottom surface of the coil is equal to a distance between the central surface and the second top surface of the coil. When the support is in the first position, the central surface is located on a side that is of the second bottom surface and that faces away from the second top surface, and when the support is in the second position, in the first direction, the central surface is located between the second top surface and the second bottom surface. In this way, when the support is in the first position, the staggering distance between the first magnetic member and the coil in the first direction is large, which helps meet the requirement of the long-focus photographing scenario and meet the thinning requirement.

In a possible implementation, the first magnetic member includes a first magnet and a second magnet that are arranged in the first direction, a polarity direction of the first magnet is parallel to and opposite to a polarity direction of the second magnet, and both the polarity direction of the first magnet and the polarity direction of the second magnet intersect with the first direction; and when the support is in the first position, a contact surface between the first magnet and the second magnet is located on the side that is of the second bottom surface of the coil and that faces away from the second top surface, and when the support is in the second position, in the first direction, the contact surface between the first magnet and the second magnet is located between the second top surface and the second bottom surface of the coil. In this way, when the support is in the first position, the staggering distance between the first magnetic member and the coil in the first direction is large, which helps meet the requirement of the long-focus photographing scenario and meet the thinning requirement.

In a possible implementation, the coil is secured to the base, and the first magnetic member is secured to the support. The focus motor further includes a sliding member and a first magnetic attraction member. The sliding member is secured to the base, the support is slidably mounted on the base through the sliding member, the first magnetic attraction member is secured to the base, and is located on a side that is of the coil and that faces away from the first magnetic member, and a first magnetic attraction force is generated between the first magnetic attraction member and the first magnetic member. In this way, the first magnetic member is disposed, so that the magnetic attraction force is generated between the first magnetic member and the first magnetic attraction member, so that the support is closely attached to the sliding member, thereby effectively improving movement stability of the support.

In a possible implementation, the first magnetic attraction member includes a third bottom surface and a third top surface that are disposed away from each other in the first direction. When the support is in the first position, a distance between the third bottom surface and the first top surface of the first magnetic member is a fifth distance, a distance between the third bottom surface and the first bottom surface of the first magnetic member is a sixth distance, and a ratio of the fifth distance to the sixth distance is less than 3. When the support is in the second position, the distance between the third bottom surface and the first top surface is a seventh distance, the distance between the third bottom surface and the first bottom surface is an eighth distance, and a ratio of the seventh distance to the eighth distance is greater than or equal to 3. When the support is in the third position, the distance between the third bottom surface and the first top surface is greater than or equal to the seventh distance. The first magnetic attraction force is used to drive the support to move from the first position to the second position.

It may be understood that the focus motor in this implementation further includes the first magnetic attraction member, and the first magnetic attraction member may be secured to the base and disposed opposite to the coil. The first magnetic attraction force may be generated between the first magnetic attraction member and the first magnetic member. When the support is in the first position, the first magnetic member and the first magnetic attraction member may be staggered in the first direction. In this way, in one aspect, the magnetic attraction force between the first magnetic attraction member and the first magnetic member can enable the support to be closely attached to the sliding member, to keep contact with the sliding member, and improve movement stability of the support. In another aspect, the magnetic attraction force between the first magnetic attraction member and the first magnetic member may be further used as a second driving force, and is jointly used with the first driving force to drive the support to slide relative to the base. In this way, the first magnetic attraction member can implement "one object for a plurality of purposes". This helps reduce a quantity of internal parts of the focus motor and save internal space of the focus motor. In addition, the first driving force and the second driving force jointly act on the support, to help increase a speed at which the support moves from the first position to the second position, and improve a working response speed of the focus motor, thereby improving user experience.

In a possible implementation, when the support is in the first position, the fifth distance is less than the sixth distance. In this way, when the support is in the first position, a staggering distance between the first magnetic member and the first magnetic attraction member in the first direction is large, which helps meet the requirement of the long-focus photographing scenario and meet the thinning requirement.

In a possible implementation, the focus motor further includes a second magnetic attraction member, the second magnetic attraction member is secured to the base, the second magnetic attraction member is disposed closer, than the first magnetic attraction member, to a bottom portion of the base, and a second magnetic attraction force is generated between the second magnetic attraction member and the first magnetic member.

It may be understood that, when the support moves between the first position and the second position, an overlapping area between the first magnetic member and a projection of the first magnetic attraction member on a plane on which the first magnetic member is located is small, and a magnetic attraction component force between the first magnetic attraction member and the first magnetic member in a thickness direction of the first magnetic attraction member is small, so that the support is easily separated from the sliding member, affecting movement stability of the support. However, in this implementation, a second magnetic attraction member is further disposed on the base, and the second magnetic attraction member is disposed closer, than the first magnetic attraction member, to a first platform of the base. In this way, when the support moves between the first position and the second position, a magnetic attraction component force in the thickness direction of the second magnetic attraction member can be generated between the second magnetic attraction member and the first magnetic member, so that the support can also be closely attached to the sliding member when moving between the first position and the second position, thereby improving movement stability of the support.

In a possible implementation, when the support is in the second position, in the first direction, the first bottom surface of the first magnetic member is located on a side that is of the second magnetic attraction member and that faces the first magnetic attraction member. In this way, when the support is located within the focus stroke segment, the first magnetic member and the second magnetic attraction member may be completely staggered, to avoid that when the focus motor performs focusing, the second magnetic attraction member 82 generates a magnetic attraction force on the first magnetic member to interfere with movement of the support. This helps improve movement precision of the focus motor.

In a possible implementation, the base includes a frame portion and the bottom portion, the frame portion is secured to a periphery of the bottom portion, the coil is secured to the frame portion, and the support is located on an inner side of the frame portion, and is slidably mounted on the frame portion. When the support is in the first position, a distance between the support and the bottom portion is a first height, when the support is in the second position, the distance between the support and the bottom portion is a second height, and when the support is in the third position, the distance between the support and the bottom portion is a third height, where the first height is less than the second height, and the second height is less than or equal to the third height. In this way, when the support is in the first position, the distance between the support and the base is small, so that an overall height of the focus motor is low. When the support is in the second position, the distance between the support and the base is large. In other words, when the support switches from the non-working state to the focusing state, a stroke of the support moving from the first position to the second position is large, so that the requirement of the long-focus photographing scenario can be met. In other words, the focus motor in this implementation can meet the requirement of the long-focus photographing scenario, and the height of the focus motor is low, so as to meet the thinning requirement.

In a possible implementation, the focus motor further includes a first elastic member, the first elastic member is secured to the bottom portion and is disposed opposite to the support; and the support further has a pop-up position between the first position and the second position; when the support is in the first position, the first elastic member is in an extended state or a compressed state, and when the support is in the pop-up position, the first elastic member is in an original state; and when the support moves from the first position to the second position, the first elastic member switches from the extended state or the compressed state to the original state, to drive the support to move from the first position to the pop-up position.

It may be understood that this implementation further includes the first elastic member. When the support is located in the first position, the first elastic member is in the extended state or the compressed state, namely, a deformed state. When the support moves from the first position to the second position, the first elastic member may release an elastic force, and the elastic force may act on the support and be used as a third driving force. The third driving force and the first driving force may be jointly used to drive the support to slide relative to the base in the first direction, so that the support moves from the first position to the pop-up position. In this way, when a pop-up stroke length of the focus motor is the same, the first elastic member is disposed to assist in driving the support to move from the first position to the pop-up position, thereby improving the working response speed of the focus motor. When the first driving force of the drive mechanism is the same, the first elastic member is disposed to assist in driving the support to slide, so that the pop-up stroke length of the focus motor can be further increased, thereby meeting the requirement of the long-focus photographing scenario.

In a possible implementation, the first elastic member is a resilient sheet, the first elastic member includes a fixed part and an elastic part, the fixed part is secured to the bottom portion, and the elastic part is suspended relative to the bottom portion and disposed opposite to the support. When the support is in the first position, the support compresses the elastic part, and the first elastic part is in the extended state. When the support is in the pop-up position, the support is in contact with the elastic part, and the first elastic part is in the original state. When the support is in the second position, the support and the elastic part are spaced apart. In this way, when the support moves from the pop-up position to the second position, the support may be spaced apart from the first elastic member, to avoid that during movement of the support from the pop-up position to the second position, the first elastic member applies, to the support, a force opposite to a movement direction of the support, which affects movement of the support.

In a possible implementation, the support includes a first part and a second part, the first part is secured to an end of the second part, the first part and the second part are disposed at an included angle, first clearance space is enclosed between the first part and the second part, and the second part is configured to hold the first optical element. The bottom portion includes a first platform, a connection portion, and a second platform, where the first platform and the second platform have a height difference in the first direction, the connection portion is connected between the first platform and the second platform, the first platform is secured to the frame portion, at least a part of the second platform and at least a part of the connection portion are spaced apart from the frame portion, the first platform, the connection portion, and the frame portion together enclose second clearance space, and the second clearance space is in communication with the first clearance space; and when the support is in the first position, at least a part of the first part is located in the second clearance space, and at least a part of the second platform is located in the first clearance space. In this way, the first clearance space and the second clearance space are disposed, so that the support and the base can mutually utilize dimensional space of each other, and the overall structure of the focus motor is compact, thereby facilitating thinning arrangement of the focus motor.

In a possible implementation, the second part is provided with a first through hole configured to hold the first optical element, the first through hole is in communication with the first clearance space, the second platform is provided with a second through hole, the second through hole is opposite to the first through hole and is in communication with the first through hole, the connection portion, the second platform, and the frame portion together enclose third clearance space, the third clearance space and the second clearance space are spaced apart, the third clearance space is in communication with the first clearance space through the second through hole, and the third clearance space is configured to accommodate a second optical element and/or a photosensitive component. In this way, the third clearance space is disposed, so that the second optical element and/or the photosensitive component may further utilize thickness space of the base, to facilitate thinning arrangement of the focus motor and the second optical element and/or the photosensitive component as a whole.

In a possible implementation, the focus motor further includes a circuit board, a second magnetic member, and a first position sensor. The second magnetic member is secured to the support, the circuit board is secured to the base, the first position sensor is secured to the circuit board and is disposed opposite to the second magnetic member, and the first position sensor is configured to detect a position of the second magnetic member. In this way, the first position sensor is disposed to cooperate with the second magnetic member, to detect a position of the support, thereby improving precision of control on the focus motor.

In a possible implementation, the focus motor further includes a second position sensor, the second position sensor is secured to the circuit board, the second position sensor is disposed closer, than the first position sensor, to the bottom portion of the base, and the second position sensor is configured to detect a position of the first magnetic member. In this way, the second position sensor may assist the first position sensor in detecting the position of the support, thereby improving the precision of control on the focus motor.

In a possible implementation, the focus motor further includes a second elastic member, one end of the second elastic member is secured to the base, and the other end of the second elastic member is secured to the support. When the support is in the first position, a length of the second elastic member is a first length. When the support is in the second position, a length of the second elastic member is a second length. The first length is greater than the second length. In this way, an elastic force of the second elastic member may be further used to assist in driving the support to move from the first position to the second position.

According to a second aspect, a camera module is provided. The camera module includes a first optical element and the foregoing focus motor, and the first optical element is mounted on the support. It may be understood that, the focus motor of the camera module in this implementation is a pop-up focus motor that has a low height and that meets a requirement of a long-focus photographing scenario and meets a thinning requirement. In addition, in this implementation, only one drive mechanism is disposed in the focus motor, and the current direction of the coil is changed, so that the support is driven to pop-up (that is, moves from the first position to the second position) and the support is driven to move within the focus stroke segment to implement focusing (that is, moves from the second position to the third position). A structure is simple, which helps implement miniaturization arrangement of the focus motor.

In a possible implementation, the camera module further includes a variable aperture, the variable aperture is secured to the support and is sleeved on the first optical element, the focus motor further includes a second elastic member, the second elastic member is electrically conductive, one end of the second elastic member is secured to the base and is electrically connected to the circuit board of the focus motor, and the other end of the second elastic member is secured to the support and is electrically connected to the variable aperture. When the support is in the first position, a length of the second elastic member is a first length. When the support is in the second position, a length of the second elastic member is a second length. The first length is greater than the second length. In this way, in one aspect, the second elastic member may be configured to supply power to the variable aperture, and in another aspect, an elastic force of the second elastic member may be further used to assist in driving the support to move from the first position to the second position. The second elastic member can implement "one object for a plurality of purposes". This helps simplify structural arrangement of the focus motor.

In a possible implementation, the camera module further includes a photosensitive component, and the photosensitive component is secured to a light-emitting side of the focus motor. In this way, the photosensitive component is secured to the focus motor, so that overall structures of the photosensitive component and the focus motor are compact, and internal space of the camera module is saved.

According to a third aspect, an electronic device is provided. The electronic device includes a device housing and the foregoing camera module. The camera module is mounted in the device housing. It may be understood that, the focus motor of the camera module in this implementation is a pop-up focus motor that has a low height and that meets a requirement of a long-focus photographing scenario and meets a thinning requirement. This facilitates thinning arrangement of the electronic device. In addition, in this implementation, only one drive mechanism is disposed in the focus motor, and the current direction of the coil is changed, so that the support is driven to pop-up (that is, moves from the first position to the second position) and the support is driven to move within the focus stroke segment to implement focusing (that is, moves from the second position to the third position). A structure is simple, which helps implement miniaturization arrangement of the focus motor.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a diagram of a structure of an electronic device in some implementations according to an implementation of this application;
FIG. 2 is a cross-sectional view of a structure of the electronic device shown in FIG. 1 taken along A-A according to an implementation;
FIG. 3 is a diagram of a structure of a camera module shown in FIG. 2 according to some implementations;
FIG. 4 is an exploded diagram of a structure of the camera module shown in FIG. 3 according to some implementations;
FIG. 5 is a cross-sectional view of a structure of the camera module shown in FIG. 3 taken along B-B according to an implementation;
FIG. 6 is a diagram of a structure of a focus motor of the camera module shown in FIG. 3;
FIG. 7 is an exploded diagram of a structure of the focus motor shown in FIG. 6 according to some implementations;
FIG. 8 is a cross-sectional view of a partial structure of the focus motor shown in FIG. 6 taken along C-C according to an implementation;
FIG. 9 is a diagram of a structure of a support shown in FIG. 7 from another perspective;
FIG. 10 is a diagram of a structure of the support shown in FIG. 9 from still another perspective;
FIG. 11 is a diagram of an assembled structure of partial structures of the focus motor shown in FIG. 7 according to some implementations;
FIG. 12 is a cross-sectional view of a partial structure of the focus motor shown in FIG. 6 taken along C-C according to an implementation;
FIG. 13 is a diagram of a structure of a fixed base shown in FIG. 7 from another perspective;
FIG. 14 is a diagram of a structure of the fixed base shown in FIG. 13 from still another perspective;
FIG. 15 is a diagram of a structure of a first elastic member shown in FIG. 7 according to some implementations;
FIG. 16 is a diagram of an assembled structure of partial structures of the focus motor shown in FIG. 7 according to some implementations;
FIG. 17 is a diagram of a structure of the structure shown in FIG. 16 from another perspective;
FIG. 18 is a diagram of an assembled structure of partial structures of the focus motor shown in FIG. 7 according to some implementations;
FIG. 19 is a cross-sectional view of a partial structure of the focus motor shown in FIG. 6 taken along C-C according to an implementation;
FIG. 20 is a cross-sectional view of a structure of the focus motor shown in FIG. 6 taken along C-C according to an implementation;
FIG. 21 is a diagram of a structure of the focus motor shown in FIG. 6 from another perspective;
FIG. 22 is a cross-sectional view of a structure of the focus motor shown in FIG. 6 taken along D-D according to an implementation;
FIG. 23 is a brief cross-sectional view of a partial structure of the focus motor shown in FIG. 20 obtained when a support is in a first position;
FIG. 24 is a brief cross-sectional view of a partial structure of the focus motor shown in FIG. 20 obtained when a support is in a second position;
FIG. 25 is a brief cross-sectional view of a partial structure of the focus motor shown in FIG. 20 obtained when a support is in a third position; and
FIG. 26 is a brief cross-sectional view of a partial structure of the focus motor shown in FIG. 20 obtained when a support is in a pop-up position.

### DESCRIPTION OF EMBODIMENTS

The following describes implementations of this application with reference to the accompanying drawings in the implementations of this application.

In descriptions of implementations of this application, it should be noted that the terms "mounting" and "connection" should be understood in a broad sense, unless otherwise specified and limited. For example, "connection" may be a detachable connection or a non-detachable connection, or may be a direct connection or an indirect connection through an intermediate medium. "Fixed connection" means that two parts are connected to each other and a relative positional relationship remains unchanged after the two parts are connected to each other. Orientation terms mentioned in implementations of this application, for example, "above", "below", "inner", and "outer" merely indicate directions with reference to accompanying drawings. Therefore, the orientation terms are used to better and more clearly describe and understand implementations of this application, but do not indicate or imply that a specified apparatus or element needs to have a specific orientation or be constructed or operated in a specific orientation. Therefore, this cannot be understood as a limitation on implementations of this application. "A plurality of" means at least two.

In implementations of this application, the terms "first", "second", "third", and "fourth" are merely intended for a purpose of description, and shall not be understood as an indication or implication of relative importance or an implicit indication of a quantity of indicated technical features. Therefore, a feature defined by "first", "second", "third", or "fourth" may explicitly or implicitly include one or more features.

In implementations of this application, "and/or" describes only an association relationship between associated objects and indicates that three relationships may exist. For example, A and/or B may indicate the following three cases: Only A exists, both A and B exist, and only B exists. In addition, the character "/" in this specification generally indicates an "or" relationship between the associated objects.

Reference to "an implementation", "some implementations", or the like described in this specification means that one or more implementations of this application include a specific feature, structure, or characteristic described with reference to the implementations. Therefore, statements such as "in an implementation", "in some implementations", "in some other implementations", and "in another implementation" that appear at different places in this specification do not necessarily mean referring to a same implementation. Instead, the statements mean "one or more but not all of implementations", unless otherwise specifically emphasized in another manner. The terms "include", "have", and their variants all mean "include but are not limited to", unless otherwise specifically emphasized in another manner.

It may be understood that specific implementations described herein are merely used to explain a related invention, but are not intended to limit the invention. In addition, it should be noted that, for ease of description, only a part related to the invention is shown in the accompanying drawings.

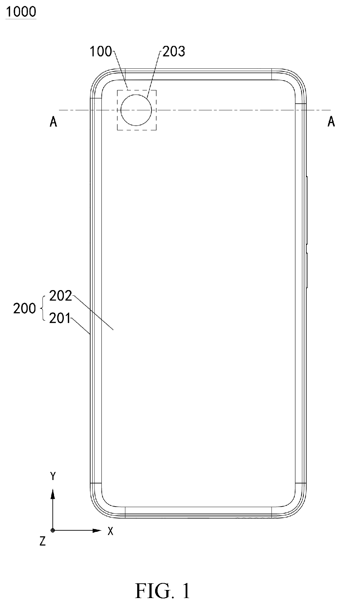

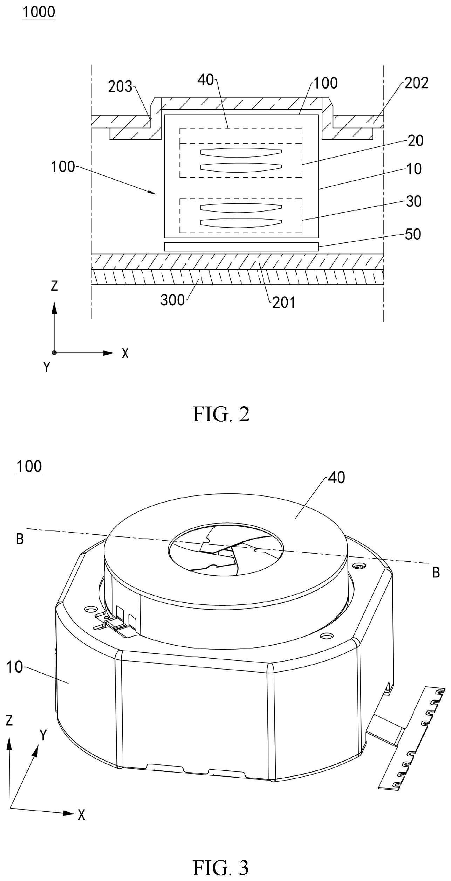

FIG. 1 is a diagram of a structure of an electronic device 1000 in some implementations according to an implementation of this application. FIG. 2 is a cross-sectional view of a structure of the electronic device 1000 shown in FIG. 1 taken along A-A according to an implementation.

As shown in FIG. 1 and FIG. 2, the electronic device 1000 may be a device having a camera module, for example, a mobile phone, a tablet computer (tablet computer), a laptop computer (laptop computer), a personal digital assistant (personal digital assistant, PDA), a camera, a personal computer, a notebook computer, a vehicle-mounted device, a wearable device, augmented reality (augmented reality, AR) glasses, an AR helmet, virtual reality (virtual reality, VR) glasses, or a VR helmet. In the embodiment shown in FIG. 1, an example in which the electronic device 1000 is a mobile phone is used for description.

As shown in FIG. 1 and FIG. 2, the electronic device 1000 may include a camera module 100, a device housing 200, and a screen 300. The camera module 100 may be a rear-facing camera module, or may be a front-facing camera module. It should be noted that FIG. 1 and the following related accompanying drawings only schematically show some components included in the electronic device 1000. Actual shapes, actual sizes, actual positions, and actual structures of these components are not limited by FIG. 1 and the following accompanying drawings. In addition, when the electronic device 1000 is a device in another form, the electronic device 1000 may alternatively not include the screen 300.

For ease of description, a thickness direction of the electronic device 1000 is defined as a Z-axis, and is a first direction Z. A width direction of the electronic device 1000 is an X-axis, and is a second direction X. A length direction of the electronic device 1000 is a Y-axis, and is a third direction Y. It may be understood that a coordinate system of the electronic device 1000 may be flexibly set based on a specific actual requirement.

In this implementation, the device housing 200 may include a middle frame 201 and a rear cover 202. The rear cover 202 is secured to the middle frame 201. For example, the rear cover 202 may be secured to the middle frame 201 through an adhesive. The screen 300 may be located on a side that is of the middle frame 201 and that is away from the rear cover 202. In this case, the screen 300 and the rear cover 202 are respectively located on two sides of the middle frame 201. The middle frame 201 and the rear cover 202 may enclose an interior of the electronic device 1000. The interior of the electronic device 1000 may be used for placing a component, for example, a battery, a receiver, or a microphone, of the electronic device 1000. The screen 300 may be a flat screen or a curved screen.

For example, the camera module 100 may be located in the interior of the electronic device 1000. The camera module 100 may be secured to a side that is of the middle frame 201 and that faces the rear cover 202. The rear cover 202 may be provided with a light transmission hole 203. A shape of the light transmission hole 203 is not limited to a circle shown in FIG. 1. Through the light transmission hole 203, the interior of the electronic device 1000 is in communication with an exterior of the electronic device 1000. Light outside the electronic device 1000 may enter the interior of the electronic device 1000 through the light transmission hole 203. The camera module 100 may collect ambient light that enters the interior of the electronic device 1000.

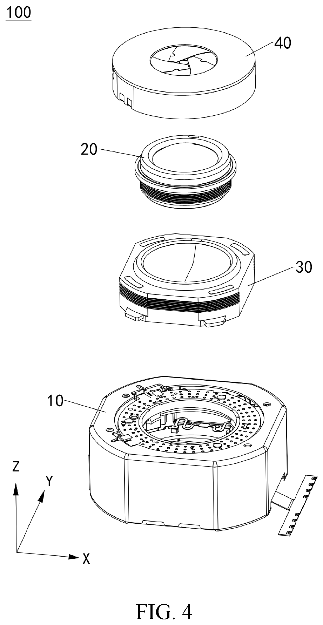

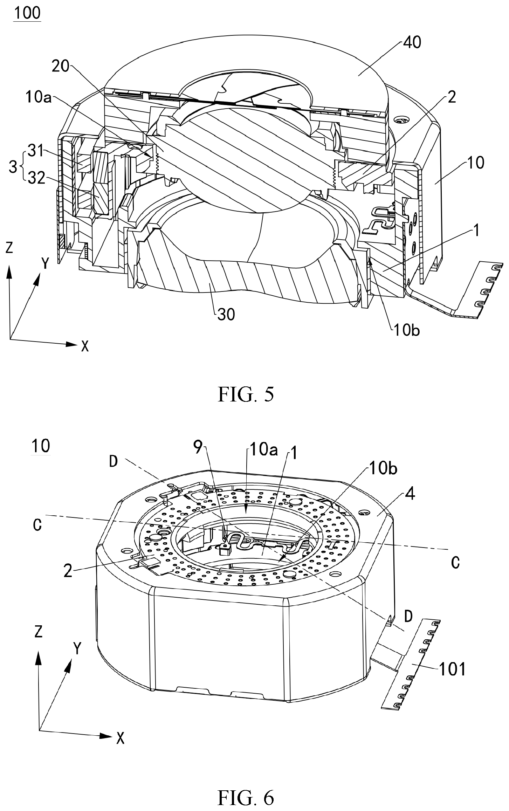

FIG. 3 is a diagram of a structure of the camera module 100 shown in FIG. 2 according to some implementations. FIG. 4 is an exploded diagram of a structure of the camera module 100 shown in FIG. 3 according to some implementations. FIG. 5 is a cross-sectional view of a structure of the camera module 100 shown in FIG. 3 taken along B-B according to an implementation.

As shown in FIG. 3 to FIG. 5, the camera module 100 may include a focus motor 10, a first optical element 20, a second optical element 30, a variable aperture 40, and a photosensitive component 50 (as shown in FIG. 2). Each of the first optical element 20 and the second optical element 30 may include one or more optical lenses. The first optical element 20 and the second optical element 30 may jointly form an optical system of the camera module 100.

For example, the focus motor 10 may include a first through hole 10a and a second through hole 10b. The first through hole 10a and the second through hole 10b may be disposed opposite to and in communication with each other. The first optical element 20 may be mounted in the first through hole 10a of the focus motor 10. The second optical element 30 may be mounted in the second through hole 10b of the focus motor 10. The variable aperture 40 may be secured to the focus motor 10. The variable aperture 40 may be sleeved on an exposed part that is of the first optical element 20 and that is relative to the first through hole 10a of the focus motor 10. The variable aperture 40 may be configured to control an amount of light entering the first optical element 20. The photosensitive component 50 may be located on a side that is of the second optical element 30 and that faces away from the first optical element 20, namely, a light-emitting side of the focus motor 10. The photosensitive component 50 may be disposed opposite to the second optical element 30. For example, the photosensitive component 50 may be secured to the middle frame 201 of the electronic device 1000. Light outside the electronic device 1000 may enter the interior of the electronic device 1000 through the light transmission hole 203, then sequentially pass through the first optical element 20 and the second optical element 30, and finally be imaged on the photosensitive component 50. In some implementations, the photosensitive component 50 may be further secured to the focus motor 10. In some other implementations, the camera module 100 may alternatively not include the second optical element 30. The photosensitive component 50 may be further secured to the focus motor 10, and is disposed opposite to the first optical element 20.

For example, the focus motor 10 may include a base 1, a support 2, and a drive mechanism 3. The support 2 may be slidably mounted on the base 1. The first through hole 10a may be formed on the support 2. The second through hole 10b may be formed on the base 1. In other words, the first optical element 20 may be secured to the support 2. The second optical element 30 may be secured to the base 1. The drive mechanism 3 may be configured to drive the support 2 to drive the first optical element 20 together to slide relative to the base 1 in the first direction Z, to implement optical focusing.

For example, the focus motor 10 may include a non-working state and a focusing state. When the focus motor 10 is in the non-working state, the support 2 may be in a first position. A distance between the first optical element 20 and the second optical element 30 is a first spacing. The drive mechanism 3 may drive the support 2 to move from the first position to a second position, to cause the focus motor 10 to switch from the non-working state to the focusing state. In this case, a distance between the first optical element 20 and the second optical element 30 is a second spacing. Then, the drive mechanism 3 may further drive the support 2 to move from the second position to a third position, so that a focal point of an optical system of the camera module 100 may be located on an imaging plane, to complete optical focusing. During movement of the support 2 from the second position to the third position, the second position may be considered as a focusing start position, namely, a position at which the focus motor 10 starts to perform focusing. The third position may be considered as a focusing completion position, namely, a position at which the focus motor 10 completes focusing. The distance that is between the first optical element 20 and the second optical element 30 and that is obtained when the support 2 is in the second position is greater than the distance that is between the first optical element 20 and the second optical element 30 and that is obtained when the support 2 is in the first position. That is, the second spacing may be greater than the first spacing.

For example, a total movement stroke of the support 2 of the focus motor 10 may include a pop-up stroke segment and a focus stroke segment. A stroke that is of the support 2 and that is between the first position and the second position is a pop-up stroke. The third position of the support 2 may be any position in the focus stroke segment. The drive mechanism 3 of the focus motor 10 may further drive the support 2 to drive the first optical element 20 to move back and forth a plurality of times within the focus stroke segment, to perform a plurality of times of focusing. For example, when a posture and/or a position of the electronic device 1000 changes due to use of a user, a focal point position of the optical system of the camera module 100 may shift relative to the imaging plane. In this case, the focus motor 10 may further include a fourth position. The drive mechanism 3 may drive the support 2 to move from the third position to the fourth position, so that the focal point of the optical system of the camera module 100 may be located on the imaging plane again, to complete optical focusing. During movement of the support 2 from the third position to the fourth position, the third position may be considered as the focusing start position, and the fourth position may be considered as the focusing completion position. That is, the support 2 moving from the third position to the fourth position may be considered as completing focusing once. By analogy, the focus motor 10 may further include a fifth position, a sixth position, and the like. In other words, when the focus motor 10 is in the focusing state, a position of the support 2 may be changed a plurality of times, to complete a plurality of times of focusing, thereby meeting a user requirement.

It should be noted that, the focus motor 10 shown in FIG. 3 and FIG. 5 are diagrams in which the support 2 is in the third position, and the third position is a middle position in the focus stroke segment. In another implementation, the third position may be another position of the support 2 in the focus stroke segment.

It may be understood that, when the focus motor 10 in this implementation is in the non-working state, the support 2 is in the first position, and the distance between the first optical element 20 and the second optical element 30 is small. This helps reduce a height of an overall structure of the focus motor 10, to meet a thinning requirement of the electronic device 1000. When the focus motor 10 works, the drive mechanism 3 may first drive the support 2 to move from the first position to the second position, so that the focus motor 10 switches from the non-working state to a focusing initial state, and the first optical element 20 enters the focus stroke segment. Then, the drive mechanism 3 drives the support 2 to move from the second position to the third position, so that the focus motor 10 switches from the focusing initial state to a focusing completed state, and the focal point of the optical system is located on the imaging plane, thereby implementing optical focusing. In this case, the distance between the first optical element 20 and the second optical element 30 is long, so that a long-focus photographing scenario can be met. In this way, when the focus motor 10 does not work, the distance between the first optical element 20 and the second optical element 30 is small, so that an overall height of the focus motor 10 is low. When the focus motor 10 works, the drive mechanism 3 may first drive the support 2 to drive the first optical element 20 together to pop out relative to the base 1 for a distance (that is, move from the first position to the second position), so that the first optical element 20 enters the focus stroke segment. After the first optical element 20 enters the focus stroke segment, the drive mechanism 3 drives the support 2 to drive the first optical element 20 together to move from the second position to the third position, thereby implementing optical focusing and meeting a requirement of a long-focus photographing scenario. In other words, the focus motor 10 in this implementation is a pop-up focus motor that has a low height and that can meet a requirement of a long-focus photographing scenario and meet a thinning requirement.

In some implementations, the camera module 100 may further include a lens cover (not shown in the figure) and a lens cover drive mechanism (not shown in the figure). The lens cover may be secured to an image side of the variable aperture 40. The lens cover drive mechanism may be configured to drive the lens cover to move in the first direction Z. For example, the lens cover drive mechanism may be a stepper motor. When the focus motor 10 needs to perform focusing, under an action of the lens cover drive mechanism, the lens cover may move, together with the support 2, in a direction that faces away from the photosensitive component 50. When the focus motor 10 needs to switch from the focusing state to the non-working state, the support 2 needs to move from a current position to the first position. In this case, the lens cover drive mechanism may drive the lens cover to drive the support 2 together to move in a direction close to the photosensitive component 50, so that the support 2 can return to the first position. In other words, the support 2 may return to the first position from a position at which optical focusing is currently completed under an action of an external force (for example, a force of the lens cover on the support 2). In another implementation, the support 2 may alternatively be receive a force from another structure, so that the support 2 can return to the first position from the position at which optical focusing is currently completed. This is not specifically limited in this application.

It should be noted that, unless otherwise specified, the focus motor 10 shown in the following accompanying drawings is a focus motor shown in a diagram in which the support 2 is located in a middle position of a focus stroke segment.

The following describes in detail a specific structure of the focus motor 10 in this implementation and relative position relationships between components of the focus motor 10 in different statuses with reference to related accompanying drawings.

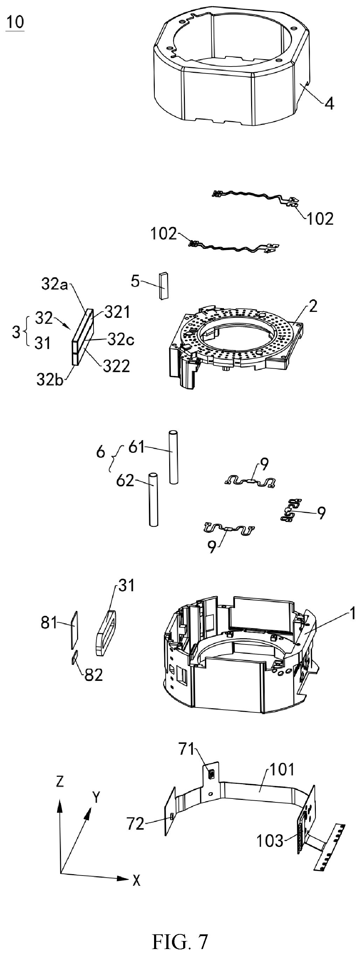

FIG. 6 is a diagram of a structure of the focus motor 10 of the camera module 100 shown in FIG. 3. FIG. 7 is an exploded diagram of a structure of the focus motor 10 shown in FIG. 6 according to some implementations.

As shown in FIG. 6 and FIG. 7, the drive mechanism 3 of the focus motor 10 may include a coil 31 and a first magnetic member 32. The focus motor 10 may further include a housing 4, a second magnetic member 5, a sliding member 6, a first position sensor 71, a second position sensor 72, a first magnetic attraction member 81, a second magnetic attraction member 82, a first elastic member 9, a circuit board 101, and a second elastic member 102. In another implementation, the focus motor 10 may alternatively not include any one or more of the second magnetic member 5, the sliding member 6, the first position sensor 71, the second position sensor 72, the first elastic member 9, the second magnetic attraction member 82, and the second elastic member 102.

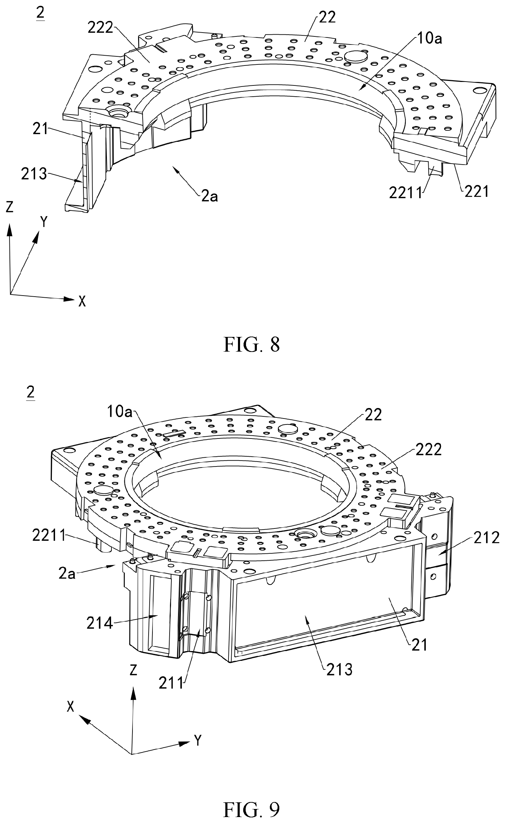

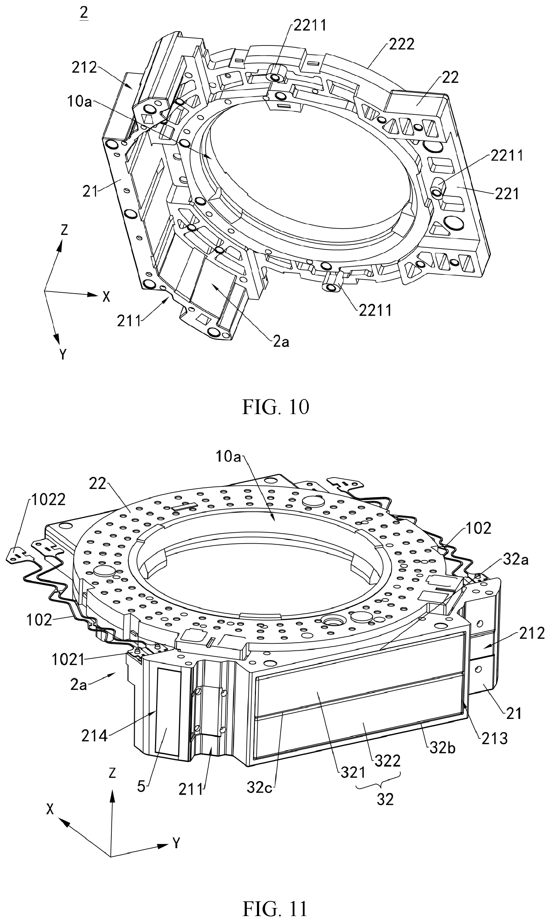

FIG. 8 is a cross-sectional view of a partial structure of the focus motor 10 shown in FIG. 6 taken along C-C according to an implementation. FIG. 9 is a diagram of a structure of the support 2 shown in FIG. 7 from another perspective. FIG. 10 is a diagram of a structure of the support 2 shown in FIG. 9 from still another perspective.

As shown in FIG. 8 to FIG. 10, the support 2 may include a first part 21 and a second part 22. The first part 21 may be secured to one end of the second part 22. The first part 21 and the second part 22 may be disposed at an included angle, for example, the included angle may be 90°. In this case, the first part 21 and the second part 22 may enclose first clearance space 2a. It should be noted that, in FIG. 8, the first part 21 and the second part 22 of the support 2 are schematically obtained through division by using dashed lines. It should be understood that, although the support 2 is divided into two parts for description in this implementation, it is not affected that the first part 21 and the second part 22 are integrally formed, that is, the support 2 may be an integrally formed structure. In another implementation, the first part 21 and the second part 22 may alternatively be two independent mechanical parts. The first part 21 may be secured to the second part 22 in a manner of bonding, screw connection, clamping connection, or the like.

For example, the first part 21 may include a first sliding groove 211 and a second sliding groove 212 that are spaced apart. Length extension directions of the first sliding groove 211 and the second sliding groove 212 may be parallel to the first direction Z. The first part 21 may further include a first mounting groove 213 and a second mounting groove 214. The first mounting groove 213 may be located between the first sliding groove 211 and the second sliding groove 212. The second mounting groove 214 may be located on a side that is of the first sliding groove 211 and that faces away from the first mounting groove 213.

For example, the second part 22 may include a first surface 221 and a second surface 222 that are disposed away from each other. The first surface 221 may face the first clearance space 2a. The second part 22 may further include a first through hole 10a. A length extension direction of the first through hole 10a may be parallel to the first direction Z. The first through hole 10a may penetrate the first surface 221 and the second surface 222, and communicate with the first clearance space 2a. A pillar 2211 may be further disposed on the first surface 221 of the second part 22. The pillar 2211 may be located in the first clearance space 2a. There may be a plurality of pillars 2211, for example, three pillars 2211. The three pillars 2211 may be space apart around the first through hole 10a.

FIG. 11 is a diagram of an assembled structure of partial structures of the focus motor 10 shown in FIG. 7 according to some implementations.

As shown in FIG. 7 and FIG. 11, the first magnetic member 32 may be secured to the first mounting groove 213 of the first part 21. The first magnetic member 32 may include a first top surface 32a and a first bottom surface 32b that are disposed away from each other in the first direction. The first magnetic member 32 may further include a central surface 32c located between the first top surface 32a and the first bottom surface 32b. A distance between the central surface 32c and the first top surface 32a may be equal to a distance between the central surface 32c and the first bottom surface 32b.

For example, the first magnetic member 32 may include a first magnet 321 and a second magnet 322. Shapes and sizes of the first magnet 321 and the second magnet 322 may be completely the same. The first magnet 321 and the second magnet 322 may be arranged in the first direction Z. In this case, a contact surface between the first magnet 321 and the second magnet 322 may form the central surface 32c of the first magnetic member 32. A polarity direction of the first magnet 321 may be parallel to and opposite to a polarity direction of the second magnet 322. A polarity direction of the first magnet 321 may intersect with the first direction, for example, may be perpendicular to the first direction. It should be understood that the polarity direction may be a direction in which an N pole of the magnet points to an S pole. In another implementation, the contact surface between the first magnet 321 and the second magnet 322 may alternatively be staggered with the central surface 32c of the first magnetic member 32. It should be understood that magnetic circuits of the first magnetic member 32 are disposed in various manners. This implementation shows only one implementation of the first magnetic member 32. In another implementation, the first magnetic member 32 may be further disposed as a Halbach magnet array or the like.

For example, the second magnetic member 5 may be secured to the second mounting groove 214 of the first part 21. The second elastic member 102 may be conductive. For example, the second elastic member 102 may be a conductive spring plate. The second elastic member 102 may include a first end 1021 and a second end 1022. The first end 1021 of the second elastic member 102 may be fixed and connected to the first part 21 of the support 2. There may be a plurality of second elastic members 102, for example, four. In another implementation, a quantity of the second elastic members 102 may be another quantity. For example, a metal part (not shown in the figure) may be embedded in the support 2, and the metal part may be electrically connected to the second elastic member 102. In this way, the second elastic member 102 may be electrically connected to another part through the metal part inside the support 2, which helps simplify assembly of the second elastic member 102 and save space.

In some implementations, the focus motor 10 may further include a stiffening member (not shown in the figure). The stiffening member may be a steel sheet. The stiffening member may be embedded inside the support 2 in a manner of injection molding or the like. In this way, the stiffening member can enhance overall structural strength of the support 2, and prolong a service life of the support 2. A part of the stiffening member may be located in the first sliding groove 211 and the second sliding groove 212. In this way, the stiffening member may perform structural stiffening on the first sliding groove 211 and the second sliding groove 212, thereby improving structural strength.

In some other implementations, the stiffening member of the focus motor 10 may further have magnetic conductivity. A part of the stiffening member may be located in the first mounting groove 213 and the second mounting groove 214. For example, the part of the stiffening member may be exposed relative to the first mounting groove 213 and the second mounting groove 214. In this way, a magnetic attraction force may be generated between the stiffening member and the first magnetic member 32 and between the stiffening member and the second magnetic member 5. This helps improve fastening stability of the first magnetic member 32 and the second magnetic member 5 with the support 2, thereby preventing the first magnetic member 32 and the second magnetic member 5 from falling off.

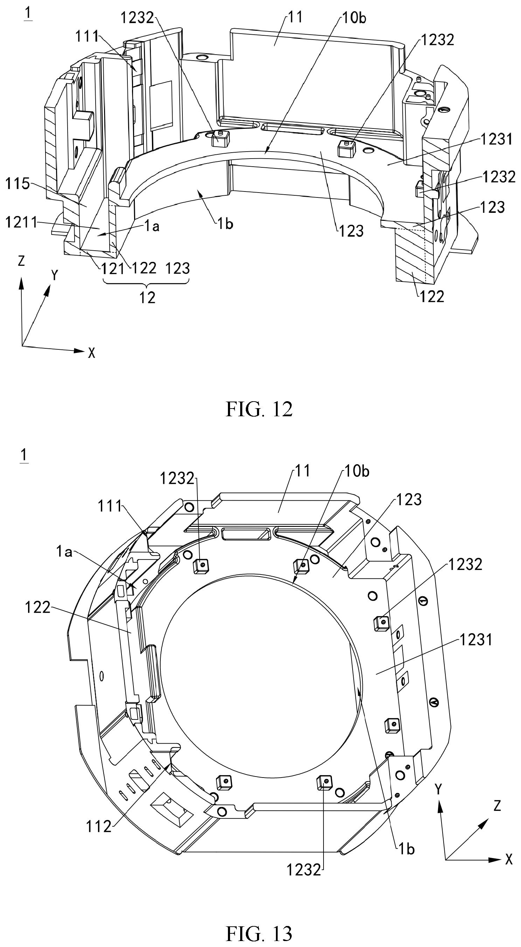

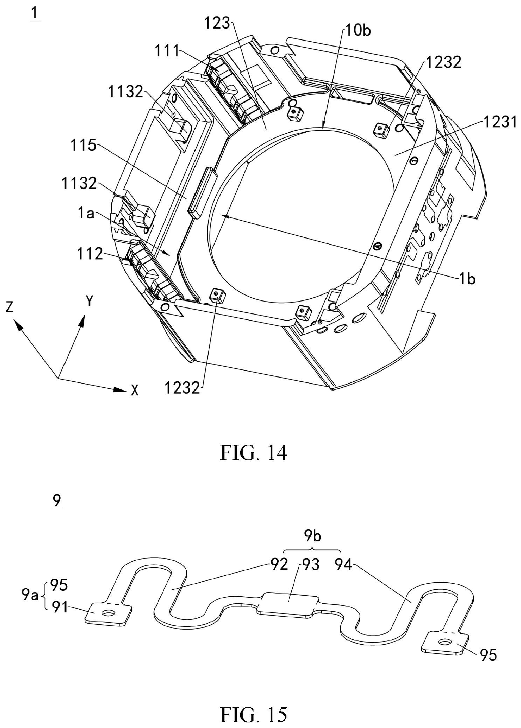

FIG. 12 is a cross-sectional view of a partial structure of the focus motor 10 shown in FIG. 6 taken along C-C according to an implementation. FIG. 13 is a diagram of a structure of a fixed base shown in FIG. 7 from another perspective. FIG. 14 is a diagram of a structure of the fixed base shown in FIG. 13 from still another perspective.

As shown in FIG. 12 to FIG. 14, a base 1 may include a frame portion 11 and a bottom portion 12. The frame portion 11 may be secured to a periphery of the bottom portion 12, and enclose an interior of the base 1 with the bottom portion 12. It should be noted that, in FIG. 12, the frame portion 11 and the bottom portion 12 of the base 1 are schematically obtained through division by using dashed lines. It should be understood that, although the base 1 is divided into two parts for description in this implementation, it is not affected that the frame portion 11 and the bottom portion 12 are integrally formed, that is, the base 1 may be an integrally formed structure.

For example, the bottom portion 12 may include a first platform 121, a connection portion 122, and a second platform 123. A surface that is of the first platform 121 and that faces the interior of the base 1 is a first surface 1211. A surface that is of the second platform 123 and that faces the interior of the base 1 is a second surface 1231. The first surface 1211 and the second surface 1231 may be spaced apart in the first direction Z. That is, there is a height difference between the first surface 1211 and the second surface 1231 in the first direction Z. The connection portion 122 may be connected between the first platform 121 and the second platform 123. It should be noted that, in FIG. 12, the first platform 121, the connection portion 122, and the second platform 123 of the bottom portion 12 are also schematically obtained through division by using dashed lines.

For example, the first platform 121 may be connected to an inner peripheral side wall 115 of the frame portion 11. A part of the second platform 123 and a part of the connection portion 122 may be spaced apart from the inner peripheral side wall 115 of the frame portion 11. The part of the second platform 123 and the part of the connection portion 122 may be secured to the inner peripheral side wall 115 of the frame portion 11. In this case, the connection portion 122, the first platform 121, and the frame portion 11 may enclose the second clearance space 1a. The second clearance space 1a may be located in the interior of the base 1. In this case, the bottom portion 12 may be roughly in a step-shaped structure. The first surface 1211 and the second surface 1231 may be two step surfaces of the step-shaped structure. For example, the connection portion 122 and the second platform 123 may further enclose the third clearance space 1b. The third clearance space 1b may be spaced apart from the interior of the base 1. In some implementations, the second platform 123 and the connection portion 122 may be further spaced apart from the inner peripheral side wall 115 of the frame portion 11.

For example, the second through hole 10b may be formed on the second platform 123. The second through hole 10b may communicate with the interior of the base 1 and the third clearance space 1b. A fastening pillar 1232 may be disposed on the second surface 1231 of the second platform 123. The fastening pillar 1232 may be located in the interior of the base 1. There may be a plurality of fastening pillars 1232. The plurality of fastening pillars 1232 may be spaced apart around the second through hole 10b, and are spaced apart from the frame portion 11. To simplify the illustration, each of FIG. 12 to FIG. 14 shows only a part of the fastening pillars 1232.

For example, the frame portion 11 may include a first fastening groove 111 and a second fastening groove 112 that are spaced apart. Both an opening of the first fastening groove 111 and an opening of the second fastening groove 112 may face the interior of the base 1. A part of the opening of the first fastening groove 111 and a part of the opening of the second fastening groove 112 may further face the second clearance space 1a.

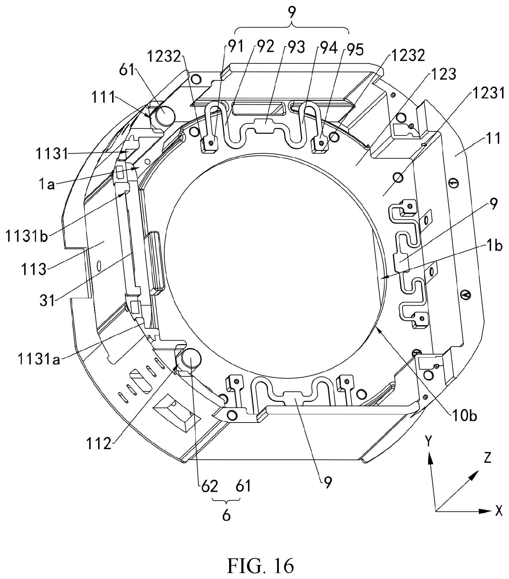

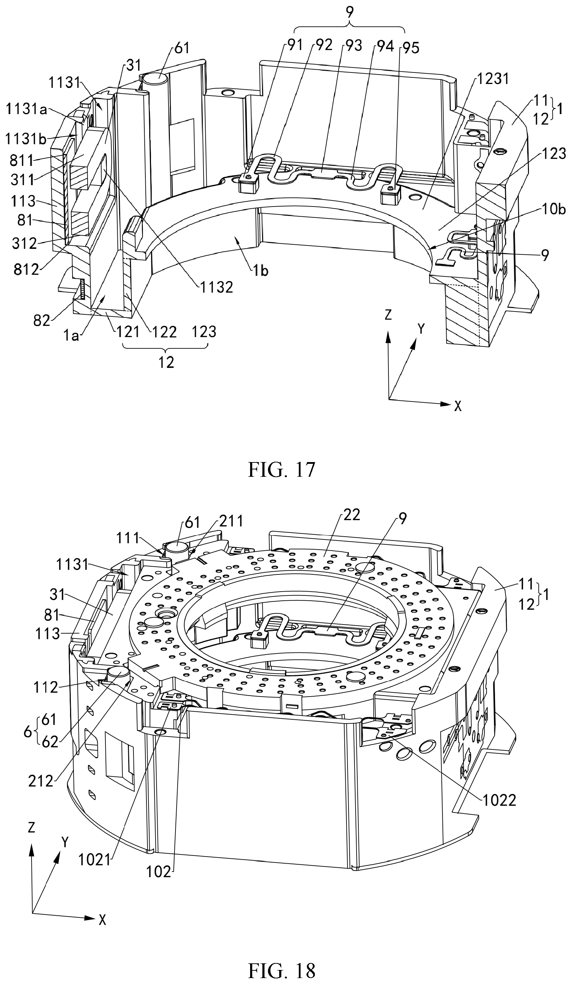

FIG. 15 is a diagram of a structure of the first elastic member 9 shown in FIG. 7 according to some implementations. FIG. 16 is a diagram of an assembled structure of partial structures of the focus motor 10 shown in FIG. 7 according to some implementations. FIG. 17 is a diagram of a structure of the structure shown in FIG. 16 from another perspective.

As shown in FIG. 15 to FIG. 17, the first elastic member 9 may be a resilient sheet. A quantity of first elastic members 9 may be the same as a quantity of pillars 2211 of the support 2. In this implementation, there may alternatively be three first elastic members 9. Shapes and sizes of the three first elastic members 9 may not be completely the same. In another implementation, shapes and sizes of the plurality of first elastic members 9 may alternatively be the same.

For example, the first elastic member 9 may include a first end portion 91, a first bent portion 92, a contact portion 93, a second bent portion 94, and a second end portion 95 that are sequentially connected. Both the first bent portion 92 and the second bent portion 94 may be bent for one or more times. The first end portion 91 and the second end portion 95 of the first elastic member 9 may form a fixed part 9a of the first elastic member 9. The first bent portion 92, the contact portion 93, and the second bent portion 94 may form an elastic part 9b of the first elastic member 9. It should be understood that, in FIG. 15, the first end portion 91, the first bent portion 92, the contact portion 93, the second bent portion 94, and the second end portion 95 of the first elastic member 9 are schematically obtained through division by using dashed lines.

For example, both the first end portion 91 and the second end portion 95 of the first elastic member 9 may be secured to two adjacent fastening pillars 1232 of the base 1. In this case, the first bent portion 92, the contact portion 93, and the second bent portion 94 of the first elastic member 9 may all be suspended relative to the second surface 1231, that is, the fixed part 9a of the first elastic member 9 may be secured to the fastening pillar 1232, and the elastic part 9b of the first elastic member 9 may be suspended relative to the second surface 1231 of the base 1. When the contact portion 93 of the first elastic member 9 is not affected by an external force, the first elastic member 9 as a whole may be in a straight state, that is, the first end portion 91, the first bent portion 92, the contact portion 93, the second bent portion 94, and the second end portion 95 may be roughly on a same plane.

Refer to FIG. 16 and FIG. 17 again. The sliding member 6 may be a sliding shaft. There may be two sliding members 6, for example, may include a first sliding shaft 61 and a second sliding shaft 62. The first sliding shaft 61 and the second sliding shaft 62 may be respectively secured to the first fastening groove 111 and the second fastening groove 112. Both a part of the first sliding shaft 61 and a part of the second sliding shaft 62 may be located in the second clearance space 1a. In another implementation, the sliding member 6 may alternatively be a roll ball. For example, a first group of roll balls and a second group of roll balls may be included, and the two groups of roll balls may be respectively mounted in the first fastening groove 111 and the second fastening groove 112. Each group of roll balls may include at least one roll ball.

For example, a part that is of the frame portion 11 and that is located between the first sliding groove 211 and the second sliding groove 212 is a first side portion 113. The first side portion 113 may be provided with a first clearance groove 1131. An opening of the first clearance groove 1131 may be formed on an inner peripheral side wall of the first side portion 113. An opening of the first clearance groove 1131 may be spaced apart from the second clearance space 1a.

For example, the coil 31 may include a second top surface 311 and a second bottom surface 312 that are disposed away from each other in the first direction Z. The coil 31 may be secured to the first clearance groove 1131. In this case, a projection of the coil 31 in the first direction Z may not overlap the second clearance space 1a. In some implementations, the first clearance groove 1131 may be further provided with two limiting protrusions 1132. The coil 31 may be sleeved on the two limiting protrusions 1132 (FIG. 14 also shows the two limiting protrusions 1132 from another angle). In this way, the limiting protrusion 1132 may assist positioning and assembly of the coil 31, thereby helping improve assembly precision of the coil 31. In another implementation, a part of the opening of the first clearance groove 1131 may further face the second clearance space 1a.

For example, the first magnetic attraction member 81 may be secured to the first clearance groove 1131, and is disposed opposite to the coil 31. The first magnetic attraction member 81 may include a third top surface 811 and a third bottom surface 812 that are disposed away from each other in the first direction Z. In some implementations, a bottom wall 1131a of the first clearance groove 1131 may alternatively be partially recessed inward to form an accommodating groove 1131b. An opening of the accommodating groove 1131b may face the coil 31. The first magnetic attraction member 81 may be secured to the accommodating groove 1131b. In this way, the accommodating groove 1131b is provided, so that physical interference that is between the first magnetic attraction member 81 and the coil 31 and that affects normal operation of the first magnetic attraction member 81 and the coil 31 can be avoided.

For example, the second magnetic attraction member 82 may be secured to a peripheral side wall of the first side portion 113. A projection of the second magnetic attraction member 82 in a thickness direction of the second magnetic attraction member 82 may cover at least a part of the second clearance space 1a. In the first direction Z, a distance between the second magnetic attraction member 82 and the first platform 121 may be less than a distance between the first magnetic member 32 and the first platform 121. That is, the second magnetic attraction member 82 may be disposed closer, than the first magnetic attraction member 81, to the first platform 121 of the base 1.

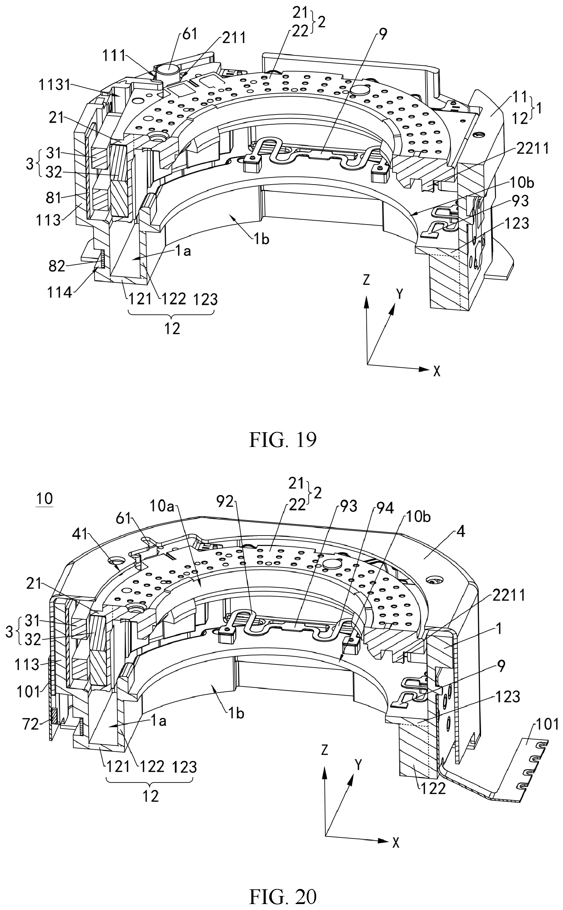

FIG. 18 is a diagram of an assembled structure of partial structures of the focus motor 10 shown in FIG. 7 according to some implementations. FIG. 19 is a cross-sectional view of a partial structure of the focus motor 10 shown in FIG. 6 taken along C-C according to an implementation.

As shown in FIG. 18 and FIG. 19, the support 2 may be mounted in the interior of the base 1. The first sliding groove 211 of the support 2 may be slidably mounted on the first sliding shaft 61. The second sliding groove 212 of the support 2 may be slidably mounted on the second sliding shaft 62. That is, the support 2 may be slidably mounted on the base 1 through the sliding member 6. The support 2 may slide relative to the base 1 in the first direction Z.

For example, the first magnetic member 32 may be disposed opposite to the coil 31. When the coil 31 is energized, an electromagnetic force in the first direction Z may be generated between the coil 31 and the first magnetic member 32, to drive the support 2 to slide relative to the base 1 in the first direction Z. A first magnetic attraction force may be generated between the first magnetic member 32 and the first magnetic attraction member 81. The first magnetic attraction force may be decomposed into a magnetic attraction component force in an X-axis direction and a magnetic attraction component force in a Z-axis direction. The magnetic attraction component force in the X-axis direction of the first magnetic attraction force may enable a groove wall of the first sliding groove 211 of the support 2 and a groove wall of the second sliding groove 212 of the support 2 to be closely attached to the first sliding shaft 61 and the second sliding shaft 62, thereby ensuring movement stability of the support 2 sliding relative to the base 1 in the first direction Z. A second magnetic attraction force may be further generated between the first magnetic member 32 and the second magnetic attraction member 82. The second magnetic attraction force may be decomposed into a magnetic attraction component force in the X-axis direction and a magnetic attraction component force in the Z-axis direction. The magnetic attraction component force in the X-axis direction of the second magnetic attraction force may also enable the groove wall of the first sliding groove 211 of the support 2 and the groove wall of the second sliding groove 212 of the support 2 to be closely attached to the first sliding shaft 61 and the second sliding shaft 62. The magnetic attraction component force in the X-axis direction generated between the second magnetic attraction member 82 and the first magnetic member 32 may be mainly used to enable the support 2 to be closely attached to the sliding member 6 when the support 2 moves between the first position and the second position.

It may be understood that, when the support 2 moves between the first position and the second position, an overlapping area between the first magnetic member 32 and a projection of the first magnetic attraction member 81 on a plane on which the first magnetic member 32 is located is small, and the magnetic attraction component force in the X-axis direction between the first magnetic attraction member 81 and the first magnetic member 32 is small. Consequently, the support 2 is easily separated from the sliding member 6, affecting movement stability of the support 2. However, in this implementation, the second magnetic attraction member 82 is further disposed on the base 1, and the second magnetic attraction member 82 is disposed closer, than the first magnetic attraction member 81, to the first platform 121 of the base 1. In this way, when the support 2 moves between the first position and the second position, the magnetic attraction component force in the X-axis direction can be generated between the second magnetic attraction member 82 and the first magnetic member 32, so that the support 2 can be closely attached to the sliding member 6 when moving between the first position and the second position, thereby improving movement stability of the support 2. In another implementation, when the support 2 is in the first position, the coil 31 and the first magnetic member 32 may alternatively be completely staggered, that is, a projection of the first magnetic member 32 on a plane on which the coil 31 is located does not overlap the coil 31.

In some implementations, the frame portion 11 may be further provided with a second clearance groove 114. An opening of the second clearance groove 114 may face away from the second clearance space 1a. The second magnetic attraction member 82 may be secured to the second clearance groove 114. In this way, the second clearance groove 114 is provided, so that the second magnetic attraction member 82 secured to the second clearance groove 114 to be closer to the second clearance space 1a, that is, a distance between the second magnetic attraction member 82 and the second clearance space 1a is small. This helps increase the magnetic attraction force in the X-axis direction generated between the second magnetic attraction member 82 and the first magnetic member 32, thereby preventing the support 2 from separating from the sliding member 6 during moving.

For example, a projection of the second clearance space 1a in the first direction Z may cover the first part 21 of the support 2. The second part 22 of the support 2 may be disposed opposite to the second platform 123 of the bottom portion 12 of the base 1. A distance between the support 2 and the base 1 may be a distance between the first surface 1211 of the first platform 121 and a surface that is of the first part 21 and that faces the first platform 121. The first through hole 10a of the support 2 may be disposed opposite to the second through hole 10b of the base 1. The plurality of pillars 2211 of the support 2 may be disposed opposite to contact portions 93 of the plurality of first elastic members 9 in a one-to-one correspondence, that is, disposed opposite to the elastic part 9b of the first elastic member 9. The second end 1022 of the second elastic member 102 may be secured to the frame portion 11 of the base 1.

In some implementations, only one end of the first elastic member 9 may be secured to the fastening pillar 1232, and the other end of the first elastic member 9 may be suspended relative to the base 1 and disposed opposite to the pillar 2211 of the support 2.

In another implementation, positions of the coil 31 and the first magnetic member 32 may be interchanged. In other words, the coil 31 may alternatively be secured to the support 2, and the first magnetic member 32 may alternatively be secured to the base 1.

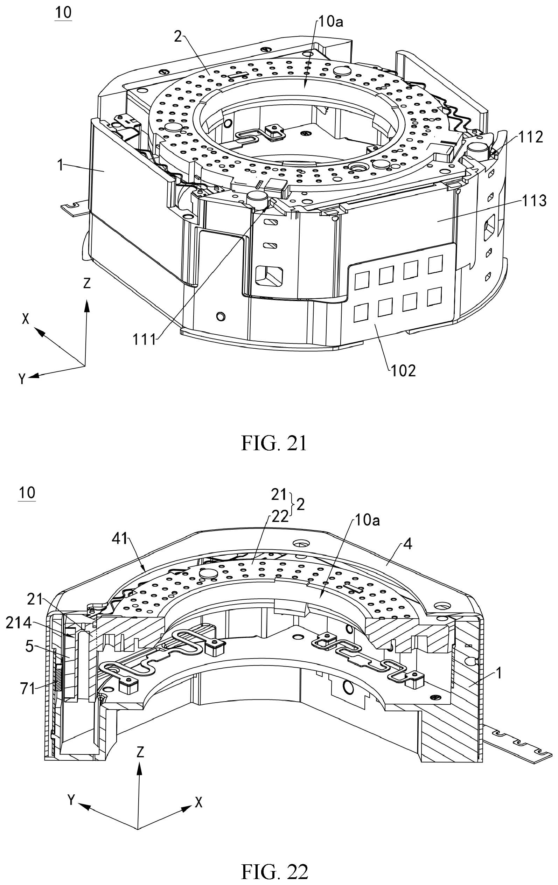

FIG. 20 is a cross-sectional view of a structure of the focus motor 10 shown in FIG. 6 taken along C-C according to an implementation. FIG. 21 is a diagram of a structure of the focus motor 10 shown in FIG. 6 from another perspective. FIG. 22 is a cross-sectional view of a structure of the focus motor 10 shown in FIG. 6 taken along D-D according to an implementation. For ease of understanding, a housing 4 is not shown in the focus motor 10 shown in FIG. 21.

As shown in FIG. 20 to FIG. 22, the housing 4 may be secured to the base 1. The housing 4 and the base 1 may enclose internal space of the focus motor 10. The support 2 may be located on an inner side of the housing 4. The housing 4 may be provided with a third through hole 41. The third through hole 41 may communicate with the first through hole 10a of the support 2. A part of the support 2 may be exposed through the third through hole 41. One end of the circuit board 101 may be secured to the frame portion 11 of the base 1, and the other end of the circuit board 101 may be secured to the housing 4. The circuit board 101 may be electrically connected to the coil 31 and the second elastic member 102. The circuit board 101 may be a flexible circuit board, a rigid circuit board, or a rigid-flexible circuit board.

For example, both the first position sensor 71 and the second position sensor 72 may be secured to the circuit board 101, and are electrically connected to the circuit board 101. The first position sensor 71 may be disposed opposite to the second magnetic member 5. The first position sensor 71 may cooperate with the second magnetic member 5 to detect magnetic field strength of the second magnetic member 5 at different positions of the support 2, so as to detect a position of the support 2. The second position sensor 72 may be disposed to face the first side portion 113 of the base 1. A projection of the second position sensor 72 in the X-axis direction may cover a part of the second clearance space 1a. The second position sensor 72 may cooperate with the first magnetic member 32 to detect magnetic field strength of the first magnetic member 32 at different positions of the support 2, so as to detect the position of the support 2. The first position sensor 71 may be mainly configured to detect a specific position of the support 2 in the focus stroke segment. The second position sensor 72 may be mainly configured to detect a specific position of the support 2 in the pop-up stroke segment. In this way, the two position sensors may cover position detection of a full stroke of the support 2, which helps improve precision of control on the focus motor 10. In another implementation, the focus motor 10 may alternatively not include the second position sensor 72.

In some implementations, the focus motor 10 may further include a drive chip 103 (refer to FIG. 7). The drive chip 103 may be secured to the circuit board 101, and is located on an inner side of the housing 4.

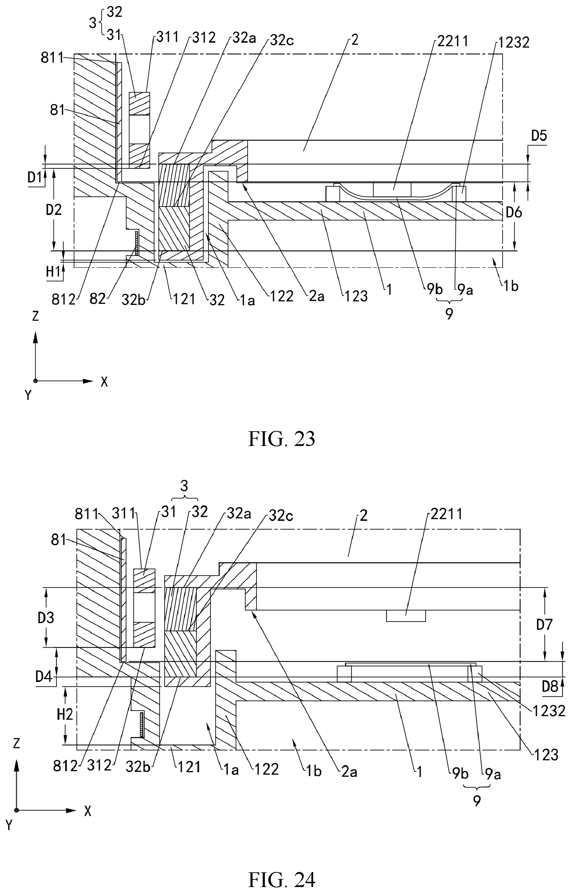

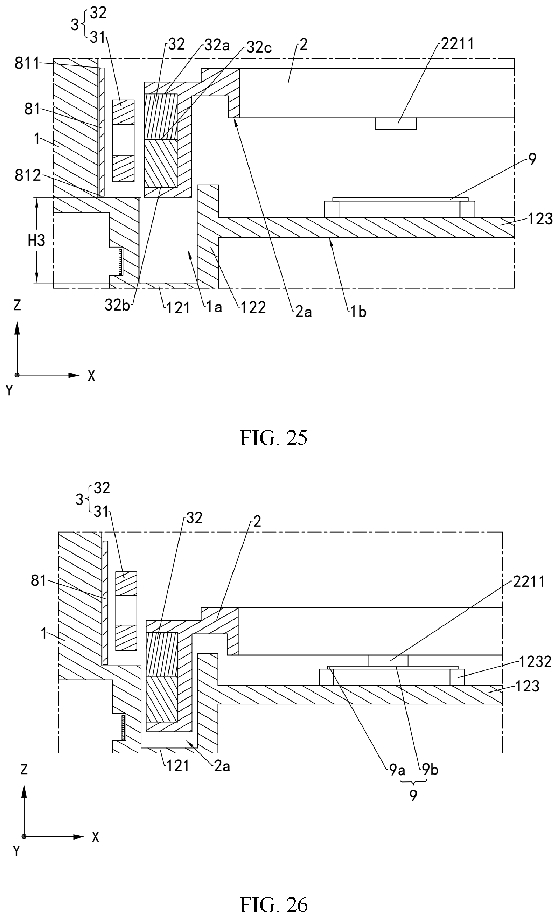

FIG. 23 is a brief cross-sectional view of a partial structure of the focus motor 10 shown in FIG. 20 obtained when the support 2 is in the first position. FIG. 24 is a brief cross-sectional view of a partial structure of the focus motor 10 shown in FIG. 20 obtained when the support 2 is in the second position. FIG. 25 is a brief cross-sectional view of a partial structure of the focus motor 10 shown in FIG. 20 obtained when the support 2 is in the third position.

Refer to FIG. 23 to FIG. 25. With reference to FIG. 20, when the support 2 is in the first position, a distance between the second bottom surface 312 of the coil 31 and the first top surface 32a of the first magnetic member 32 is a first distance D1. A distance between the second bottom surface 312 of the coil 31 and the first bottom surface 32b of the first magnetic member 32 is a second distance D2. A ratio of the first distance D1 to the second distance D2 may be less than 3. When the ratio of the first distance D1 to the second distance D2 is equal to 1, that is, the first distance D1 is equal to the second distance D2, the central surface 32c of the first magnetic member 32 and the second bottom surface 312 of the coil 31 may be located on a same plane. When the ratio of the first distance D1 to the second distance D2 is equal to 0, that is, the first distance D1 is equal to 0, the first top surface 32a of the first magnetic member 32 and the second bottom surface 312 of the coil 31 may be located on a same plane. For example, a ratio of the first distance D1 to the second distance D2 may be less than 1. In other words, the first distance D1 may be less than the second distance D2. In this case, the central surface 32c of the first magnetic member 32 may be located on a side that is of the second bottom surface 312 of the coil 31 and that faces away from the second top surface 311.

For example, when the support 2 is in the first position, a distance between the third bottom surface 812 of the first magnetic attraction member 81 and the first top surface 32a of the first magnetic member 32 is a fifth distance D5. A distance between the third bottom surface 812 of the first magnetic attraction member 81 and the first bottom surface 32b of the first magnetic member 32 is a sixth distance D6. A ratio of the fifth distance D5 to the sixth distance D6 may be less than 3. A distance between the first part 21 of the support 2 and the first platform 121 to which the support is fixed is a first height H1. The second clearance space 1a of the base 1 may accommodate the first part 21 of a part of the support 2 and at least a part of the first magnetic member 32 secured to the first part 21. A spacing between the support 2 and the base 1 in the first direction Z is small.

In this case, the first magnetic member 32 and the coil 31 may be staggered in the first direction Z. The first magnetic member 32 and the first magnetic attraction member 81 may also be staggered in the first direction Z. The first magnetic member 32 may be disposed closer, than the coil 31, to the bottom portion 12 of the base 1. The distance between the support 2 and the base 1 is small. The staggered arrangement may be completely staggered arrangement. For example, a projection of the first magnetic member 32 on a plane on which the coil 31 is located does not overlap the coil 31. Alternatively, the staggered arrangement may be partially staggered arrangement. For example, the projection of the first magnetic member 32 on the plane on which the coil 31 is located partially overlaps the coil 31. For example, the first distance D1 may be less than the second distance D2. The fifth distance D5 may be less than the sixth distance D6. The first height H1 may be less than a second height H2. The central surface 32c of the first magnetic member 32 may be located on a side that is of the second bottom surface 312 of the coil 31 and that faces away from the second top surface 311. In this way, when the support 2 is in the first position, a staggering distance in the first direction Z between the first magnetic member 32 and the coil 31 is large.

For example, when the support 2 is in the second position, the distance between the second bottom surface 312 of the coil 31 and the first top surface 32a of the first magnetic member 32 is a third distance D3. The distance between the second bottom surface 312 of the coil 31 and the first bottom surface 32b of the first magnetic member 32 is a fourth distance D4. A ratio of the third distance D3 to the fourth distance D4 may be greater than or equal to 3. The distance between the third bottom surface 812 of the first magnetic attraction member 81 and the first top surface 32a of the first magnetic member 32 is a seventh distance D7. The distance between the third bottom surface 812 of the first magnetic attraction member 81 and the first bottom surface 32b of the first magnetic member 32 is an eighth distance D8. A ratio of the seventh distance D7 to the eighth distance D8 may be greater than or equal to 3. A distance between the first part 21 of the support 2 and the first platform 121 of the support 2 is the second height H2. The second height H2 may be greater than the first height H1. In the first direction Z, the central surface 32c of the first magnetic member 32 may be located between the second top surface 311 and the second bottom surface 312 of the coil 31. In this case, a spacing between the support 2 and the base 1 in the first direction Z is large.

For example, when the support 2 is in the third position, the first magnetic member 32 may be disposed to face the coil 31. The distance between the second bottom surface 312 of the coil 31 and the first top surface 32a of the first magnetic member 32 may be greater than or equal to the third distance D3. The distance between the third bottom surface 812 of the first magnetic attraction member 81 and the first top surface 32a of the first magnetic member 32 may be greater than or equal to a seventh distance D7. The distance between the first part 21 of the support 2 and the first platform 121 of the support 2 is a third height H3. The third height H3 may be greater than or equal to the second height H2.

For example, during movement of the support 2 from the first position to the second position, a first current may be input to the coil 31. In this case, an electromagnetic force generated between the coil 31 and the first magnetic member 32 is a first driving force. The first magnetic attraction force generated between the first magnetic member 32 and the first magnetic attraction member 81 may be decomposed into a magnetic attraction component force in the X-axis direction and a magnetic attraction component force in the first direction Z. In this case, the magnetic attraction component force in the first direction Z generated between the first magnetic attraction member 81 and the first magnetic member 32 may be further used as a second driving force, and is jointly used with the first driving force to drive the support 2 to slide relative to the base 1 in the first direction Z, so that the support 2 moves from the first position to the second position. The first part 21 of the support 2 may gradually slide out of the second clearance space 1a of the base 1. During movement of the support 2 from the second position to the third position, a second current may be input to the coil 31. A direction of the second current is opposite to a direction of the first current. In this case, the first driving force generated between the coil 31 and the first magnetic member 32 may drive the support 2 to move in the focus stroke segment, to perform focusing. During movement of the support 2 from the first position to the third position, the distance between the first part 21 of the support 2 and the first platform 121 of the base 1 gradually increases.

The second position may also be referred to as a reversing position. When the support 2 moves from the first position to the second position, a current of the coil 31 needs to be reversed in this case. That is, the first current is input to the coil 31 during movement of the support 2 from the first position to the second position, and the second current is input to the coil 31 during movement of the support 2 from the second position to the third position. For example, the second position may be a position at which an electromagnetic force between the coil 31 and the first magnetic member 32 is 0, or a position at which a resultant force of the first driving force and the second driving force is 0, or any position between the two positions. In this way, in the process in which the support 2 moves from the first position to the third position, a direction of the resultant force of the first driving force and the second driving force may always point to a positive direction of the first direction Z, to always drive the support 2 to move in a direction away from the base 1 (namely, the positive direction of the first direction Z in this implementation), so that the support 2 can move from the first position to the third position.

It may be understood that, when the focus motor 10 in this implementation is in the non-working state, the distance between the support 2 and the base 1 is small, so that a distance between the first optical element 20 and the second optical element 30 (as shown in FIG. 5) is small. This helps reduce a height of an overall structure of a focus assembly, to meet the thinning requirement of the electronic device 1000. When the focus motor 10 works, the drive mechanism 3 may first drive the support 2 to move relative to the base 1 in the first direction Z, so that the support 2 moves from the first position to the second position, to gradually increase the spacing between the support 2 and the base 1 in the first direction Z, and complete popping up before focusing. Then, when the support 2 is in the second position, a current direction of the coil 31 is changed, so that the support 2 may further continue to slide in the first direction Z subsequently, to increase the spacing between the support 2 and the base 1 in the first direction Z. In addition, the first optical element 20 mounted on the support 2 can enter the focus stroke segment, so that the focus motor 10 switches from the non-working state to the focusing state to perform focusing. After the current direction of the coil 31 is changed, the drive mechanism 3 may further continue to drive the support 2 to move from the second position to the third position, so that the focal point of the optical system can be located on the imaging plane, thereby implementing optical focusing. A force applied by the drive mechanism 3 on the support 2 is the electromagnetic force (namely, the first driving force) generated between the coil 31 and the first magnetic member 32. During movement of the support 2 from the first position to the third position, the spacing between the support 2 and the base 1 in the first direction Z gradually increases. In this way, when the focus motor 10 is used in the electronic device 1000, when the focus motor 10 does not work (that is, when the focus motor 10 is in the non-working state), the spacing between the support 2 and the base 1 in the first direction Z is small, so that the overall height of the focus motor 10 is low. When the focus motor 10 works (that is, when the focus motor 10 is in the focusing state), the drive mechanism 3 may first drive the support 2 to drive the first optical element 20 together to pop out relative to the base 1 for a distance (that is, move from the first position to the second position), so that the first optical element 20 enters the focus stroke segment. After the first optical element 20 enters the focus stroke segment, the current direction of the coil 31 is changed, so that the drive mechanism 3 can further drive the support 2 to drive the first optical element 20 together to move from the second position to the third position, thereby implementing optical focusing and meeting the requirement of the long-focus photographing scenario. In other words, the focus motor 10 in this implementation is a pop-up focus motor 10 that has a low height and that can meet the requirement of the long-focus photographing scenario and meet the thinning requirement. In addition, in this implementation, only one drive mechanism 3 is disposed in the focus motor 10, and the current direction of the coil 31 is changed, so that the support 2 is driven to pop-up (that is, moves from the first position to the second position) and the support 2 is driven to move within the focus stroke segment to implement focusing (that is, moves from the second position to the third position). A structure is simple, which helps implement miniaturization arrangement of the focus motor 10.

In addition, the focus motor 10 in this implementation further includes the first magnetic attraction member 81. The first magnetic attraction member 81 may be secured to the base 1, and is disposed opposite to the coil 31. The first magnetic attraction force may be generated between the first magnetic attraction member 81 and the first magnetic member 32. In one aspect, the magnetic attraction force between the first magnetic attraction member 81 and the first magnetic member 32 may enable the support 2 to be closely attached to the sliding member 6, to keep contact with the sliding member 6, and improve movement stability of the support 2. In another aspect, the magnetic attraction force between the first magnetic attraction member 81 and the first magnetic member 32 may be further used as the second driving force, and is jointly used with the first driving force to drive the support 2 to slide relative to the base 1. In this way, the first magnetic attraction member 81 can implement "one object for a plurality of purposes". This helps reduce a quantity of internal parts of the focus motor 10 and save internal space of the focus motor 10. In addition, the first driving force and the second driving force jointly act on the support 2, to help increase a speed at which the support 2 moves from the first position to the second position, and improve a working response speed of the focus motor 10, thereby improving user experience.

In addition, the bottom portion 12 of the base 1 in this implementation includes a first platform 121, a connection portion 122, and a second platform 123. The connection portion 122 may be connected between the first platform 121 and the second platform 123. Both the first platform 121 and the second platform 123 may be connected to the frame portion 11 of the base 1. There is a height difference between the first platform 121 and the second platform 123 in a thickness direction of the focus motor 10. The first platform 121, the connection portion 122, and the frame portion 11 may enclose the second clearance space 1a. The second platform 123 and the connection portion 122 may further enclose the third clearance space 1b. The second clearance space 1a and the third clearance space 1b are spaced apart. The support 2 includes the first part 21 and the second part 22 that are disposed at an included angle. When the support 2 is in the first position, the first clearance space 2a may accommodate a part of the second platform 123, and the second clearance space 1a may accommodate the first part 21 of a part of the support 2. When the support 2 moves from the first position to the second position, the first part 21 may gradually slide out of the second clearance space 1a. The third clearance space 1b of the base 1 may be configured to accommodate the second optical element 30 and/or the photosensitive component 50 (refer to FIG. 5). In this way, the second clearance space 1a and the third clearance space 1b may reuse dimensional space of the focus motor 10 in the thickness direction, so that the overall structure of the focus motor 10 is compact. This helps implement thinning arrangement of the focus motor 10.

In some implementations, when the support 2 is in the second position, in the first direction Z, the first bottom surface 32b of the first magnetic member 32 may be located on a side that is of the second magnetic attraction member 82 and that faces the first magnetic attraction member 81. A projection of the first magnetic member 32 on a plane on which the second magnetic attraction member 82 is located does not overlap the second magnetic attraction member 82. In this way, when the support 2 is located in the focus stroke segment, the first magnetic member 32 and the second magnetic attraction member 82 may be staggered, to avoid that when the focus motor 10 performs focusing, the second magnetic attraction member 82 generates a magnetic attraction force on the first magnetic member 32 to interfere with focusing of the support 2. This helps improve movement precision of the focus motor 10.

In some implementations, with reference to FIG. 18, when the support 2 is in the first position, a length of the second elastic member 102 may be a first length. When the support 2 is in the second position, a length of the second elastic member 102 may be a second length. The first length may be greater than the second length. In other words, when the support 2 is in the first position, the second elastic member 102 may be in an extended state. In this case, the second elastic member 102 may apply a force to the support 2, to drive the support 2 to move in the first direction Z, so that the support 2 moves from the first position to the second position. In this way, in one aspect, the second elastic member 102 may be configured to supply power to the variable aperture 40 (refer to FIG. 3), and in another aspect, an elastic force of the second elastic member 102 may be further used to assist in driving the support 2 to move from the first position to the second position. The second elastic member 102 can implement "one object for a plurality of purposes". This helps simplify structural arrangement of the focus motor 10.

In some implementations, with reference to FIG. 7, the drive chip 103 of the focus motor 10 may pre-input related information of the second position, to send a related control signal to enable the current direction of the coil 31 to be reversed. For example, when the first position sensor 71 and/or the second position sensor 72 detect/detects that the support 2 is in the second position, the drive chip 103 may send a control signal, so that the current direction of the coil 31 is reversed, and the support 2 may further continue to move in the positive direction of the first direction Z after arriving at the second position.

In some implementations, the camera module 100 may further include a lens cover (not shown in the figure) and a lens cover drive mechanism (not shown in the figure). When the support 2 is in the first position, the lens cover and the lens cover drive mechanism may be further jointly configured to limit the support 2 of the focus motor 10, to avoid that the support 2 moves from the first position to the second position due to a force (for example, the second driving force between the first magnetic attraction member 81 and the first magnetic member 32) when the focus motor 10 does not need to perform focusing. For example, when the support 2 is in the first position, the lens cover may apply a force to the support 2 under the action of the lens cover drive mechanism, to prevent the support 2 from moving from the first position to the second position.

FIG. 26 is a brief cross-sectional view of a partial structure of the focus motor 10 shown in FIG. 20 obtained when the support 2 is in the pop-up position.

As shown in FIG. 23, FIG. 24, and FIG. 26, the pop-up position may be further included in the process in which the support 2 moves from the first position to the second position. When the support 2 is in the first position, the pillar 2211 of the support 2 may squeeze the elastic part 9b of the first elastic member 9 to extend the first elastic member 9. In this case, the first elastic member 9 may be in an extended state, namely, a deformed state. When the support 2 moves from the first position to the second position, the first elastic member 9 may generate an elastic force in the first direction Z, and the elastic force may act on the support 2 as the third driving force. In this case, the first driving force, the second driving force, and the third driving force may be jointly used to drive the support 2 to move relative to the base 1 in the first direction Z, to move from the first position to the pop-up position. When the support 2 is in the pop-up position, the first elastic member 9 may be in an original state. In this case, the pillar 2211 of the support 2 is attached to the first elastic member 9, and no force is generated between the pillar 2211 and the first elastic member 9. An elastic force of the first elastic member 9 is 0, and a force of the first elastic member 9 on the support 2 is 0, that is, the third driving force is 0. When the first magnetic member 32 moves from a reversing position to the second position, the first elastic member 9 may be separated from the pillar 2211 of the support 2. In this case, the force of the first elastic member 9 on the support 2 is still 0, that is, the third driving force is 0. In this implementation, there are three first elastic members 9. The three first elastic members 9 may be evenly distributed with respect to the second through holes 10b (as shown in FIG. 20). In this way, in one aspect, the plurality of first elastic members 9 are disposed to help increase a driving force for the support 2 to move from the first position to the pop-up position, so that the support 2 can quickly move to the pop-up position. In another aspect, the plurality of first elastic members 9 are evenly distributed, which helps improve movement stability of the support 2.

It may be understood that the focus motor 10 in this implementation may further include the first elastic member 9. A fastening pillar 1232 may be disposed at the bottom portion 12 of the base 1. The fixed part 9a of the first elastic member 9 may be secured to the fastening pillar 1232, and the elastic part 9b of the first elastic member 9 may be suspended relative to the bottom portion 12 of the base 1. The pillar 2211 disposed opposite to the first elastic member 9 may be disposed in the support 2. The pop-up position may be further included in the process in which the support 2 moves from the first position to the second position. When the support 2 is in the first position, the pillar 2211 of the support 2 may squeeze a part that is of the first elastic member 9 and that is suspended relative to the base 1. In this case, the first elastic member 9 is in the extended state, namely, the deformed state. When the support 2 moves from the first position to the second position, the first elastic member 9 may release an elastic force, and the elastic force may act on the support 2 as the third driving force. The third driving force and the first driving force may be jointly used to drive the support 2 to slide relative to the base 1 in the first direction Z, so that the support 2 moves from the first position to the pop-up position. When the support 2 moves from the pop-up position to the second position, the first elastic member 9 is separated from the pillar 2211 of the support 2, and a force of the first elastic member 9 on the support 2 is 0, that is, the third driving force is 0. In this way, when a pop-up stroke length of the focus motor 10 is the same, the first elastic member 9 is disposed to assist in driving the support 2 to move from the first position to the pop-up position, thereby improving a working response speed of the focus motor 10. When the first driving force of the drive mechanism 3 is the same, the first elastic member 9 is disposed to assist in driving the support 2 to slide, so that the pop-up stroke length of the focus motor 10 can be further increased, thereby meeting the requirement of the long-focus photographing scenario.

In some implementations, when the focus motor 10 is in the non-working state, and the support 2 is in the first position, an external force may be applied on the support 2, so that the support 2 can squeeze the first elastic member 9 and does not move under action of the first elastic member 9, so that the focus motor 10 can remain in the non-working state. The external force applied on the support 2 may be a force applied by the lens cover on the support 2. For example, the force applied by the lens cover on the support 2 may be gravity that is of the lens cover and/or the lens cover drive mechanism and that is obtained when the lens cover drive mechanism is not powered on, and/or resistance provided by self-locking inside the lens cover drive mechanism, and/or resistance provided by a cogging torque of a motor inside the lens cover drive mechanism. In another implementation, the force applied by the lens cover on the support 2 may alternatively be a driving force that is on the lens cover and that is applied when the lens cover drive mechanism is powered on.

In another implementation, the first elastic member 9 may alternatively be a spiral spring. When the support 2 is in the first position, the support 2 may squeeze the first elastic member 9 under an external force (for example, a force jointly applied on the support 2 through cooperation between the lens cover and the lens cover drive mechanism), and the first elastic member 9 may be in a compressed state. When the support 2 is in the second position, the support 2 may be attached to the first elastic member 9, and no force is generated between the support 2 and the first elastic member 9. In this case, the first elastic member 9 is in the original state.

It should be noted that features in implementations of this application may be combined with each other when there is no conflict, and any combination of features in different implementations also falls within the protection scope of this application. In other words, the plurality of implementations described above may alternatively be combined according to an actual requirement.

It should be noted that all the foregoing accompanying drawings are example figures of this application, and do not represent actual sizes of products. In addition, a size proportional relationship between components in the accompanying drawings is not intended to limit an actual product in this application.

The foregoing descriptions are merely some implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A focus motor (10) comprising:
a base (1);
a support (2), slidably mounted on the base (1), wherein the support (2) is configured to hold a first optical element (20); and
a drive mechanism (3), comprising a coil (31) and a first magnetic member (32), wherein one of the coil (31) and the first magnetic member (32) is secured to the base (1), the other is secured to the support (2), the coil (31) cooperates with the first magnetic member (32) to drive the support (2) to move relative to the base (1) in a first direction (Z), and the first direction (Z) is an optical axis direction of the first optical element (20), wherein
the drive mechanism (3) is configured to drive the support (2) to move from a first position to a second position, to cause the focus motor (10) to switch from a non-working state to a focusing state, and the drive mechanism (3) is further configured to drive the support (2) to move from the second position to a third position; and
a first current is input to the coil (31) during movement of the support (2) from the first position to the second position, a second current is input to the coil (31) during movement of the support (2) from the second position to the third position, a current direction of the first current is opposite to a current direction of the second current, and a spacing between the support (2) and the base (1) in the first direction (Z) gradually increases during movement of the support (2) from the first position to the third position.

2. The focus motor (10) according to claim 1, wherein the first magnetic member (32) comprises a first top surface (32a) and a first bottom surface (32b) that are disposed away from each other in the first direction (Z), and the coil (31) comprises a second top surface (311) and a second bottom surface (312) that are disposed away from each other in the first direction (Z); and when the support (2) is in the first position, a distance between the second bottom surface (312) and the first top surface (32a) is a first distance (D1), a distance between the second bottom surface (312) and the first bottom surface (32b) is a second distance (D2), and a ratio of the first distance (D1) to the second distance (D2) is less than 3;
when the support (2) is in the second position, the distance between the second bottom surface (312) and the first top surface (32a) is a third distance (D3), the distance between the second bottom surface (312) and the first bottom surface (32b) is a fourth distance (D4), and a ratio of the third distance (D3) to the fourth distance (D4) is greater than or equal to 3; and
when the support (2) is in the third position, the distance between the second bottom surface (312) and the first top surface (32a) is greater than or equal to the third distance (D3).

3. The focus motor (10) according to claim 2, wherein when the support (2) is in the first position, the first distance (D1) is less than the second distance (D2).

4. The focus motor (10) according to claim 2 or 3, wherein the first magnetic member (32) further comprises a central surface (32c) located between the first top surface (32a) and the first bottom surface (32b), and a distance between the central surface (32c) and the second bottom surface (312) of the coil (31) is equal to a distance between the central surface (32c) and the second top surface (311) of the coil (31); and
when the support (2) is in the first position, the central surface (32c) is located on a side that is of the second bottom surface (312) and that faces away from the second top surface (311); and when the support (2) is in the second position, in the first direction (Z), the central surface (32c) is located between the second top surface (311) and the second bottom surface (312).

5. The focus motor (10) according to any one of claims 2 to 4, wherein the first magnetic member (32) comprises a first magnet (321) and a second magnet (322) that are arranged in the first direction (Z), a polarity direction of the first magnet (321) is parallel to and opposite to a polarity direction of the second magnet (322), and both the polarity direction of the first magnet (321) and the polarity direction of the second magnet (322) intersect with the first direction (Z); and
when the support (2) is in the first position, a contact surface between the first magnet (321) and the second magnet (322) is located on the side that is of the second bottom surface (312) of the coil (31) and that faces away from the second top surface (311); and when the support (2) is in the second position, in the first direction (Z), the contact surface between the first magnet (321) and the second magnet (322) is located between the second top surface (311) and the second bottom surface (312) of the coil (31).

6. The focus motor (10) according to any one of claims 1 to 5, wherein the coil (31) is secured to the base (1), the first magnetic member (32) is secured to the support (2), the focus motor (10) further comprises a sliding member (6) and a first magnetic attraction member (81), the sliding member (6) is secured to the base (1), the support (2) is slidably mounted on the base (1) through the sliding member (6), the first magnetic attraction member (81) is secured to the base (1) and is located on a side that is of the coil (31) and that faces away from the first magnetic member (32), and a first magnetic attraction force is generated between the first magnetic attraction member (81) and the first magnetic member (32).

7. The focus motor (10) according to claim 6, wherein the first magnetic attraction member (81) comprises a third bottom surface (812) and a third top surface (811) that are disposed away from each other in the first direction (Z); and when the support (2) is in the first position, a distance between the third bottom surface (812) and the first top surface (32a) of the first magnetic member (32) is a fifth distance (D5), a distance between the third bottom surface (812) and the first bottom surface (32b) of the first magnetic member (32) is a sixth distance (D6), and a ratio of the fifth distance (D5) to the sixth distance (D6) is less than 3;
when the support (2) is in the second position, the distance between the third bottom surface (812) and the first top surface (32a) is a seventh distance (D7), the distance between the third bottom surface (812) and the first bottom surface (32b) is an eighth distance (D8), and a ratio of the seventh distance (D7) to the eighth distance (D8) is greater than or equal to 3;
when the support (2) is in the third position, the distance between the third bottom surface (812) and the first top surface (32a) is greater than or equal to the seventh distance (D7); and
the first magnetic attraction force is used to drive the support (2) to move from the first position to the second position.

8. The focus motor (10) according to claim 7, wherein when the support (2) is in the first position, the fifth distance (D5) is less than the sixth distance (D6).

9. The focus motor (10) according to any one of claims 6 to 8, wherein the focus motor (10) further comprises a second magnetic attraction member (82), the second magnetic attraction member (82) is secured to the base (1), the second magnetic attraction member (82) is disposed closer, than the first magnetic attraction member (81), to a bottom portion (12) of the base (1), and a second magnetic attraction force is generated between the second magnetic attraction member (82) and the first magnetic member (32).

10. The focus motor (10) according to claim 9, wherein when the support (2) is in the second position, in the first direction (Z), the first bottom surface (32b) of the first magnetic member (32) is located on a side that is of the second magnetic attraction member (82) and that faces the first magnetic attraction member (81).

11. The focus motor (10) according to any one of claims 1 to 10, wherein the base (1) comprises a frame portion (11) and the bottom portion (12), the frame portion (11) is secured to a periphery of the bottom portion (12), the coil (31) is secured to the frame portion (11), and the support (2) is located on an inner side of the frame portion (11) and is slidably mounted on the frame portion (11); and
when the support (2) is in the first position, a distance between the support (2) and the bottom portion (12) is a first height (H1); when the support (2) is in the second position, the distance between the support (2) and the bottom portion (12) is a second height (H2); and when the support (2) is in the third position, the distance between the support (2) and the bottom portion (12) is a third height (H3), wherein the first height (H1) is less than the second height (H2), and the second height (H2) is less than or equal to the third height (H3).

12. The focus motor (10) according to claim 11, wherein the focus motor (10) further comprises a first elastic member (9), the first elastic member (9) is secured to the bottom portion (12) and is disposed opposite to the support (2), and the support (2) further has a pop-up position between the first position and the second position; when the support (2) is in the first position, the first elastic member (9) is in an extended state or a compressed state; and when the support (2) is in the pop-up position, the first elastic member (9) is in an original state; and
when the support (2) moves from the first position to the second position, the first elastic member (9) switches from the extended state or the compressed state to the original state, to drive the support (2) to move from the first position to the pop-up position.

13. The focus motor (10) according to claim 12, wherein the first elastic member (9) is a resilient sheet, the first elastic member (9) comprises a fixed part (9a) and an elastic part (9b), the fixed part (9a) is secured to the bottom portion (12), and the elastic part (9b) is suspended relative to the bottom portion (12) and disposed opposite to the support (2); when the support (2) is in the first position, the support (2) compresses the elastic part (9b), and the first elastic member (9) is in the extended state; when the support (2) is in the pop-up position, the support (2) is in contact with the elastic part (9b), and the first elastic member (9) is in the original state; and when the support (2) is in the second position, the support (2) and the elastic part (9b) are spaced apart.

14. The focus motor (10) according to any one of claims 11 to 13, wherein the support (2) comprises a first part (21) and a second part (22), the first part (21) is secured to an end of the second part (22), the first part (21) and the second part (22) are disposed at an included angle, first clearance space (2a) is enclosed between the first part (21) and the second part (22), and the second part (22) is configured to hold the first optical element (20);
the bottom portion (12) comprises a first platform (121), a connection portion (122), and a second platform (123), the first platform (121) and the second platform (123) have a height difference in the first direction (Z), the connection portion (122) is connected between the first platform (121) and the second platform (123), the first platform (121) is secured to the frame portion (11), at least a part of the second platform (123) and at least a part of the connection portion (122) are spaced apart from the frame portion (11), the first platform (121), the connection portion (122), and the frame portion (11) together enclose second clearance space (1a), and the second clearance space (1a) is in communication with the first clearance space (2a); and
when the support (2) is in the first position, at least a part of the first part (21) is located in the second clearance space (1a), and at least a part of the second platform (123) is located in the first clearance space (2a).

15. The focus motor (10) according to claim 14, wherein the second part (22) is provided with a first through hole (10a) configured to hold the first optical element (20), the first through hole (10a) is in communication with the first clearance space (2a), the second platform (123) is provided with a second through hole (10b), the second through hole (10b) is opposite to the first through hole (10a) and is in communication with the first through hole (10a), the connection portion (122), the second platform (123), and the frame portion (11) together enclose third clearance space (1b), the third clearance space (1b) and the second clearance space (1a) are spaced apart, the third clearance space (1b) is in communication with the first clearance space (2a) through the second through hole (10b), and the third clearance space (1b) is configured to accommodate a second optical element (30) and/or a photosensitive component (50).

16. The focus motor (10) according to any one of claims 11 to 15, wherein the focus motor (10) further comprises a circuit board (101), a second magnetic member (5), and a first position sensor (71), the second magnetic member (5) is secured to the support (2), the circuit board (101) is secured to the base (1), the first position sensor (71) is secured to the circuit board (101) and is disposed opposite to the second magnetic member (5), and the first position sensor (71) is configured to detect a position of the second magnetic member (5).

17. The focus motor (10) according to claim 16, wherein the focus motor (10) further comprises a second position sensor (72), the second position sensor (72) is secured to the circuit board (101), the second position sensor (72) is disposed closer, than the first position sensor (71), to the bottom portion (12) of the base (1), and the second position sensor (72) is configured to detect a position of the first magnetic member (32).

18. The focus motor (10) according to claim 16 or 17, wherein the focus motor (10) further comprises a second elastic member (102), one end of the second elastic member (102) is secured to the base (1), and the other end of the second elastic member (102) is secured to the support (2); and
when the support (2) is in the first position, a length of the second elastic member (102) is a first length; and when the support (2) is in the second position, a length of the second elastic member (102) is a second length, wherein the first length is greater than the second length.

19. A camera module (100) comprising a first optical element (20) and the focus motor (10) according to any one of claims 1 to 17, wherein the first optical element (20) is mounted on the support (2).

20. The camera module (100) according to claim 19, wherein the camera module (100) further comprises a variable aperture (40), the variable aperture (40) is secured to the support (2) and is sleeved on the first optical element (20), the focus motor (10) further comprises the second elastic member (102), the second elastic member (102) is electrically conductive, one end of the second elastic member (102) is secured to the base (1) and is electrically connected to the circuit board (101) of the focus motor (10), and the other end of the second elastic member (102) is secured to the support (2) and is electrically connected to the variable aperture (40); and
when the support (2) is in the first position, a length of the second elastic member (102) is a first length; and when the support (2) is in the second position, a length of the second elastic member (102) is a second length, wherein the first length is greater than the second length.

21. The camera module (100) according to claim 19 or 20, wherein the camera module (100) further comprises a photosensitive component (50), and the photosensitive component (50) is secured to a light-emitting side of the focus motor (10).

22. An electronic device (1000), comprising a device housing (200) and the camera module (100) according to any one of claims 19 to 21, wherein the camera module (100) is mounted in the device housing (200).
